# EUROPEAN PATENT APPLICATION

(11) **EP 4 831 801 A1**
(43) Date of publication of application: **28.10.2026**
(21) Application number: 24916411.2
(22) Date of filing: 02.09.2024
(51) Int. Cl.: G06F 9/451

(54) **CONTENT DISPLAY METHOD AND ELECTRONIC DEVICE**

(30) Priority: 10.01.2024 CN 202410043792
(71) Applicant: Huawei Technologies Co., Ltd., Shenzhen, Guangdong 518129 (CN)
(72) Inventor: KANG, Yu, Shenzhen, Guangdong 518129 (CN); REN, Jie, Shenzhen, Guangdong 518129 (CN); MAO, Feng, Shenzhen, Guangdong 518129 (CN); WU, Tianyi, Shenzhen, Guangdong 518129 (CN); ZHU, Yanming, Shenzhen, Guangdong 518129 (CN); ZENG, Yiliang, Shenzhen, Guangdong 518129 (CN); LV, Ting, Shenzhen, Guangdong 518129 (CN)
(74) Representative: Isarpatent
(86) International application number: PCT/CN2024/116203
(87) International publication number: WO 2025/148359

(57) **Abstract**

Embodiments of the present invention disclose a content display method and an electronic device. The method includes: The electronic device displays a first interface of a first application; obtains, in response to a first event that occurs in the first interface, an application category corresponding to a first link of a target content block in the first interface, where the application category indicates a category of a second application that opens the first link; obtains third information based on the first link and the application category, where the third information includes summary information indicating specific content displayed after the first link is opened; and displays the summary information. In an entire process in which the electronic device displays content of a link, operations are convenient, and waiting time of a user is short.

## Description

This application claims priority to Chinese Patent Application No. 202410043792.4, filed with the China National Intellectual Property Administration on January 10, 2024 and entitled "CONTENT DISPLAY METHOD AND ELECTRONIC DEVICE", which is incorporated herein by reference in its entirety.

### TECHNICAL FIELD

The present invention relates to the field of computer technologies, and in particular, to a content display method and an electronic device.

### BACKGROUND

In a chat scenario or a reading scenario, a display interface of a current application on an electronic device often includes a link, for example, a password, a universal resource locator (Universal Resource Locator, URL) link, or a two-dimensional code. A user needs to manually obtain a link text of the link, and then manually operate the electronic device to enable the electronic device to start another application and open the link by using the another application, so that the user can view content of the link. As a result, in an entire process in which the electronic device displays the content of the link, operations are complex, and waiting time of a user is long.

### SUMMARY

In view of this, embodiments of the present invention provide a content display method and an electronic device. In an entire process in which the electronic device displays content of a link, operations are convenient, and waiting time of a user is short.

According to a first aspect, an embodiment of the present invention provides a content display method. The method includes:
displaying a first interface of a first application;
obtaining, in response to a first event that occurs in the first interface, an application category corresponding to a first link of a target content block in the first interface, where the application category indicates a category of a second application that opens the first link;
obtaining third information based on the first link and the application category, where the third information includes summary information indicating specific content displayed after the first link is opened; and
displaying the summary information. In this embodiment of this application, the summary information of the link in the first interface can be directly displayed in response to only the first event that occurs in the first interface, so that the content of the link in the first interface can be quickly viewed without caring about which application can open the link or searching for a location of the application, thereby improving convenience. In an entire process in which the electronic device displays the content of the link, operations are convenient, and waiting time of a user is short.

With reference to the first aspect, in some implementations of the first aspect, the obtaining the third information based on the first link and the application category includes:
obtaining second information based on the first link, where the second information includes the specific content displayed after the first link is opened; and
obtaining the third information based on the second information and the application category. In this embodiment of this application, the summary information of the specific content displayed after the first link is opened is obtained based on the first link, so as to quickly display the content of the first link subsequently.

With reference to the first aspect, in some implementations of the first aspect, before the obtaining the third information based on the second information and the application category, the method further includes:
obtaining a function category based on the second information, where the function category indicates a category of a function of a page corresponding to the first link in the second application; and
the obtaining the third information based on the second information includes:
   obtaining the third information based on the second information, the application category, and the function category. In this embodiment of this application, the function category of the first link can be obtained based on the specific content displayed after the first link is opened, and the function category is a subcategory of the application category. If the application category includes only one function category, the function category is determined once the application category is determined, there is no need to further determine the function category of the first link, and the second information and the application category are directly input into a large model to output the third information. If the application category includes a plurality of function categories, the function category needs to be first determined, and then the second information, the application category, and the function category are input into the large model to output the third information.

With reference to the first aspect, in some implementations of the first aspect, the target content block includes a domain name of the first link; and before the obtaining the application category corresponding to the first link of the target content block in the first interface, the method further includes:
determining whether a trustlist includes the domain name of the first link; and
if the trustlist includes the domain name of the first link, performing the obtaining the application category corresponding to the first link of the target content block in the first interface; or
if the trustlist does not include the domain name of the first link, displaying an insecurity prompt of the first link. In this embodiment of this application, a security check is performed on the domain name of the link, and information such as the application category of the link continues to be obtained only in a secure case, thereby improving link access security. In an insecure case, the insecurity prompt of the link is displayed, to prevent the user from opening the link, thereby improving link access security.

With reference to the first aspect, in some implementations of the first aspect, the obtaining, in response to the first event that occurs in the first interface, the application category corresponding to the first link of the target content block in the first interface includes:
in response to the first event that occurs in the first interface,
obtaining a first content block that is in a content block of the first interface and that corresponds to a location of the first event;
when the first content block includes a link, determining the first content block as the target content block; and
obtaining the application category corresponding to the first link in the target content block. In this embodiment of this application, the content block corresponding to the location of the first event is the first content block; and then that the first content block is the target content block is determined based on a link included in content information of the first content block. Specifically, the content information of the first content block is identified. If the link is identified, the first content block is the target content block, and the application category corresponding to the first link in the target content block is obtained. If the link is not identified, the first content block is not the target content block.

With reference to the first aspect, in some implementations of the first aspect, the first event is a first user operation event. In this embodiment of this application, the first user operation event includes a touch and hold operation performed by the user on the first link or a tap operation performed by the user on a menu option of the first link. The first user operation event does not cause a content change event of the first interface. In this embodiment of this application, the content change event of the first interface is an event that content to be displayed in the first interface changes, and the content change event of the first interface can trigger the first interface to be refreshed.

With reference to the first aspect, in some implementations of the first aspect, the first event is the content change event of the first interface. For example, the content change event may be automatically triggered by a system or triggered by a user operation. In this embodiment of this application, an operation of the content change event triggered by the user operation is referred to as a second user operation event. For example, the second user operation event is a sliding operation (for example, a sliding up operation or a sliding down operation) performed by the user on the first interface or a sending operation.

For example, the first interface is a chat interface of the user and Xiao Hong. When receiving a new message sent by Xiao Hong, the electronic device automatically considers that a content change event of the chat interface occurs.

For example, when the user edits a text on the chat interface and then performs the sending operation, the electronic device automatically considers that the content change event of the chat interface occurs.

For example, the first interface is a reading interface. When the user performs the sliding operation on the first interface, page content of the first interface changes, and the electronic device triggers a content change event of the reading interface in response to the sliding operation of the user.

With reference to the first aspect, in some implementations of the first aspect, the obtaining, in response to the first event that occurs in the first interface, the application category corresponding to the first link of the target content block in the first interface includes:
refreshing the first interface in response to the first event that occurs in the first interface;
obtaining the target content block that is newly added to the refreshed first interface and that includes a link; and
obtaining the application category corresponding to the first link in the target content block. In this embodiment of this application, the content change event of the first interface can trigger refreshing of the first interface, obtaining the target content block that is newly added to the refreshed first interface and that includes the link, and obtaining the application category corresponding to the first link in the target content block.

With reference to the first aspect, in some implementations of the first aspect, before the displaying the summary information, the method further includes:
displaying, based on first location information of the target content block, a first view prompt corresponding to the first link; and
in response to an operation performed by the user on the first view prompt, performing the displaying the summary information. In this embodiment of this application, the first view prompt of the first link is first displayed, and then the summary information of the first link is displayed after the user performs an operation on the first view prompt. Therefore, the user may determine, based on whether the electronic device displays the first view prompt of the first link, whether the first link supports quick viewing, and display the summary information of the first link only when the user needs to quickly view the content of the first link.

With reference to the first aspect, in some implementations of the first aspect, before the displaying the summary information, the method further includes:
in response to an operation performed by the user on the first view prompt within preset time, performing the displaying the summary information; or
in response to an operation that is not performed by the user on the first view prompt within the preset time, stopping displaying the first view prompt. In this embodiment of this application, the first view prompt of the first link is first displayed, and the summary information of the first link is displayed only when the user performs an operation on the first view prompt within the preset time. If the user does not perform the operation on the first view prompt within the preset time, the first view prompt is stopped being displayed.

With reference to the first aspect, in some implementations of the first aspect, the displaying the summary information includes:
displaying, in the first interface in a superposition manner, a second interface that is not displayed in full screen, where the second interface includes the summary information. In this embodiment of this application, the second interface that is not displayed in full screen is displayed in the first interface in a superposition manner, so that the content of the first link is displayed.

With reference to the first aspect, in some implementations of the first aspect, the displaying the insecurity prompt of the first link includes:
displaying, in the first interface in a superposition manner, a third interface that is not displayed in full screen, where the third interface includes the insecurity prompt of the first link. In this embodiment of this application, the third interface that is not displayed in full screen is displayed in the first interface in a superposition manner, so that the insecurity prompt of the first link is displayed.

With reference to the first aspect, in some implementations of the first aspect, the first interface includes a chat interface or a reading interface.

With reference to the first aspect, in some implementations of the first aspect, the first link includes one or more of a password, a universal resource locator URL link, a link presented in a form of an image, a two-dimensional code, or a text link.

With reference to the first aspect, in some implementations of the first aspect, the obtaining the second information based on the first link includes:
creating a first virtual screen;
opening, on the first virtual screen, the first link by using the second application; and
obtaining the second information from a page obtained after the first link is opened. In this embodiment of this application, the first virtual screen is created in a background, so that the summary information of the specific content displayed after the first link is opened is quickly obtained, and a content summary of the first link can be quickly viewed on a current application interface without caring about which application can open the first link or searching for a location of the application, thereby improving convenience.

With reference to the first aspect, in some implementations of the first aspect, the application category includes a social type, a short-form video type, a shopping type, a travel type, a video type, a music type, a radio type, a community type, a news type, a convenient life type, or a browser type.

With reference to the first aspect, in some implementations of the first aspect, the application category is a social type, and the function category includes a chat window page, a personal business card, or an applet page; or
the application category is a short-form video type, and the function category includes a short-form video play page or a commodity details page; or
the application category is a shopping type, and the function category includes a commodity details page or a store details page; or
the application category is a travel type, and the function category includes a location details page or a route details page; or
the application category is a video type, and the function category includes a video play page; or
the application category is a music type, and the function category includes a music play page or an album details page; or
the application category is a radio type, and the function category includes a radio play page; or
the application category is a community type, and the function category includes a post details page, a personal homepage, or a commodity details page; or
the application category is a news type, and the function category includes a news details page or a video play page; or
the application category is a convenient life type, and the function category includes a store details page or a group purchase details page; or
the application category is a browser type, and the function category includes an actual content page.

With reference to the first aspect, in some implementations of the first aspect, the first application and the second application are different. In this embodiment of this application, the content of the first link is directly displayed in the first interface of the first application, so that the content of the first link can be quickly viewed on the current application interface without switching to the second application to view the content of the first link and then returning to an original application. In an entire process in which the electronic device displays the content of the first link, operations are convenient, and waiting time of a user is short.

According to a second aspect, an embodiment of the present invention provides an electronic device, including a processor and a memory. The memory is configured to store a computer program, the computer program includes program instructions, and when the processor runs the program instructions, the electronic device is enabled to perform the steps of the foregoing method.

According to a third aspect, an embodiment of the present invention provides a computer-readable storage medium. The computer-readable storage medium stores a computer program, the computer program includes program instructions, and when the program requests to be run by a computer, the computer is enabled to perform the foregoing method.

According to a fourth aspect, an embodiment of the present invention provides a computer program product. The computer program product includes instructions, and when the computer program product is run on a computer or any one of at least one processor, the computer is enabled to perform the functions/steps in the foregoing method.

In the technical solutions of the content display method and the electronic device provided in embodiments of the present invention, the method includes: displaying a first interface of a first application; obtaining, in response to a first event that occurs in the first interface, an application category corresponding to a first link of a target content block in the first interface, where the application category indicates a category of a second application that opens the first link; obtaining third information based on the first link and the application category, where the third information includes summary information indicating specific content displayed after the first link is opened; and displaying the summary information. In an entire process in which the electronic device displays content of a link, operations are convenient, and waiting time of a user is short.

### BRIEF DESCRIPTION OF DRAWINGS

FIG. 1a is a diagram of receiving a password in a chat scenario;
FIG. 1b is a diagram of receiving an image and a two-dimensional code in a chat scenario;
FIG. 1c is a diagram of receiving a URL link in a chat scenario;
FIG. 2a is a diagram of a link presented in a form of an image in an article reading scenario;
FIG. 2b is a diagram of a two-dimensional code in an article reading scenario;
FIG. 2c is a diagram of a text hyperlink in an article reading scenario;
FIG. 3a to FIG. 3e are diagrams of displaying content of a link in a chat scenario;
FIG. 4a to FIG. 4e are other diagrams of displaying content of a link in a chat scenario;
FIG. 5 is a flowchart of a content display method according to an embodiment of the present invention;
FIG. 6a is a diagram of displaying content of a Taobao^{®} password on a chat page according to an embodiment of the present invention;
FIG. 6b is a diagram of displaying content of a two-dimensional code and an image on a chat page according to an embodiment of the present invention;
FIG. 7a is a diagram of displaying content of a TikTok^{®} password on a chat page according to an embodiment of the present invention;
FIG. 7b is a diagram of enlarging a small video window in 7a for playing;
FIG. 7c is a diagram in which an electronic device directly displays content of a TikTok^{®} password after jumping from FIG. 7a or FIG. 7b to an application;
FIG. 8a is a diagram of displaying content of a text link on an article reading page according to an embodiment of the present invention;
FIG. 8b is a diagram of displaying, on an article reading page, content of a link presented in a form of an image according to an embodiment of the present invention;
FIG. 8c is a diagram of displaying content of a two-dimensional code on an article reading page according to an embodiment of the present invention;
FIG. 9a is a diagram of displaying content of a URL link on a chat page according to an embodiment of the present invention;
FIG. 9b is a diagram of displaying an insecurity prompt of a URL link on a chat page according to an embodiment of the present invention;
FIG. 10 is a flowchart of another content display method according to an embodiment of the present invention;
FIG. 11a is another diagram of displaying content of a Taobao^{®} password on a chat page according to an embodiment of the present invention;
FIG. 11b is another diagram of displaying content of a two-dimensional code and an image on a chat page according to an embodiment of the present invention;
FIG. 12a is another diagram of displaying content of a text link on an article reading page according to an embodiment of the present invention;
FIG. 12b is another diagram of displaying, on an article reading page, content of a link presented in a form of an image according to an embodiment of the present invention;
FIG. 12c is another diagram of displaying content of a two-dimensional code on an article reading page according to an embodiment of the present invention;
FIG. 13a is another diagram of displaying content of a URL link on a chat page according to an embodiment of the present invention;
FIG. 13b is another diagram of displaying an insecurity prompt of a URL link on a chat page according to an embodiment of the present invention;
FIG. 14 is a flowchart of still another content display method according to an embodiment of the present invention;
FIG. 15 is a flowchart of obtaining third information based on a first link and an application category in FIG. 14, where the third information includes summary information indicating specific content displayed after the first link is opened; and
FIG. 16 is a diagram of a structure of an electronic device according to an embodiment of the present invention.

### DESCRIPTION OF EMBODIMENTS

To make the technical solutions in the present invention more comprehensible, the following describes embodiments of the present invention in detail with reference to the accompanying drawings.

It should be clear that the described embodiments are merely some but not all of embodiments of the present invention. All other embodiments obtained by a person of ordinary skill in the art based on embodiments of the present invention without creative efforts shall fall within the protection scope of the present invention.

The terms used in embodiments of the present invention are merely for the purpose of illustrating specific embodiments, and are not intended to limit the present invention. The terms "a", "said" and "the" of singular forms used in embodiments and the appended claims of the present invention are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The present invention mainly resolves problems of complex operations, low efficiency, and long waiting time of a user in a process of displaying content of a link in the following two scenarios.

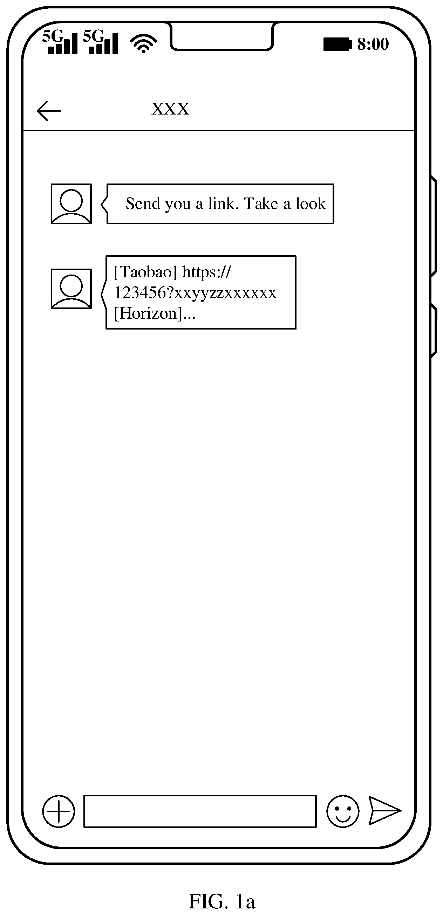

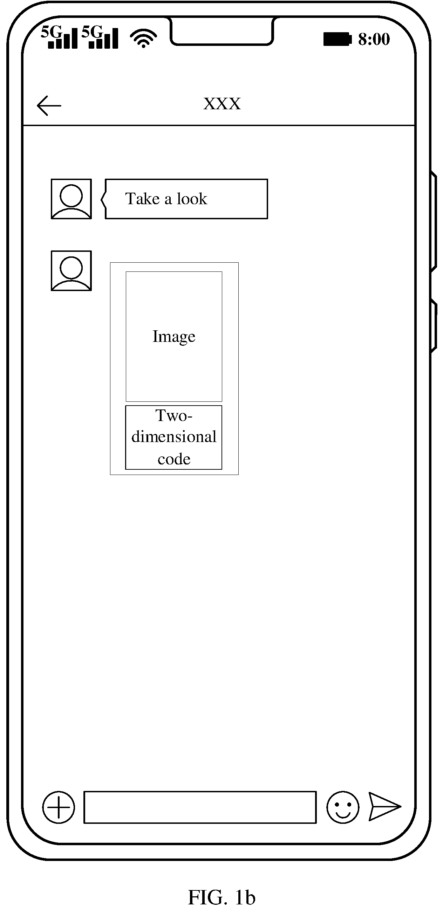

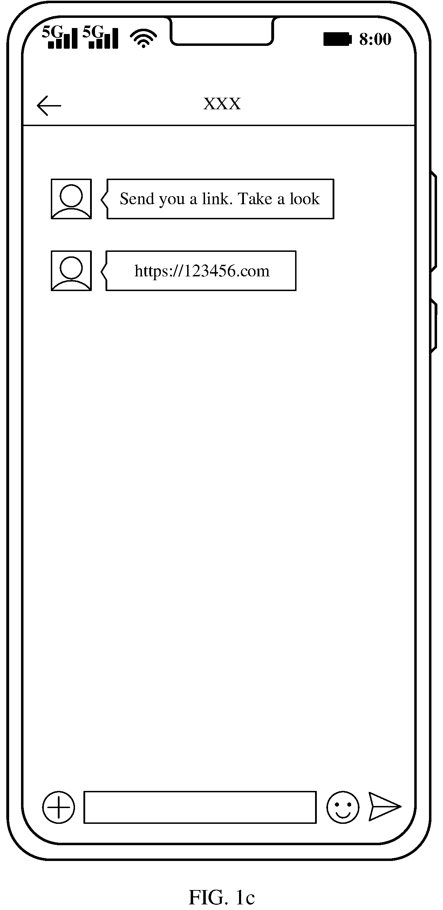

Scenario 1: A link (for example, a password, a URL link, a link presented in a form of an image, or a two-dimensional code) is received in a chat scenario. For example, FIG. 1a is a diagram of receiving a password in a chat scenario, FIG. 1b is a diagram of receiving an image and a two-dimensional code in a chat scenario, and FIG. 1c is a diagram of receiving a URL link in a chat scenario.

If content of the link needs to be displayed, a procedure includes: (1) The electronic device copies a text of the link in response to an operation of the user. (2) The user considers an application that can display specific content of the link. (3) The electronic device exits a current chat application in response to an operation of the user. (4) The electronic device starts the application that can display the specific content of the link, and directly displays the content of the link by using the application, or displays the content of the link by using the application in response to a link pasting operation of the user. (5) After the user finishes viewing the content of the link, the electronic device returns to an interface of the chat application in response to an operation of the user, and the user continues to chat. Therefore, the process of displaying the content of the link has problems of complex operations, low efficiency, and long waiting time of the user.

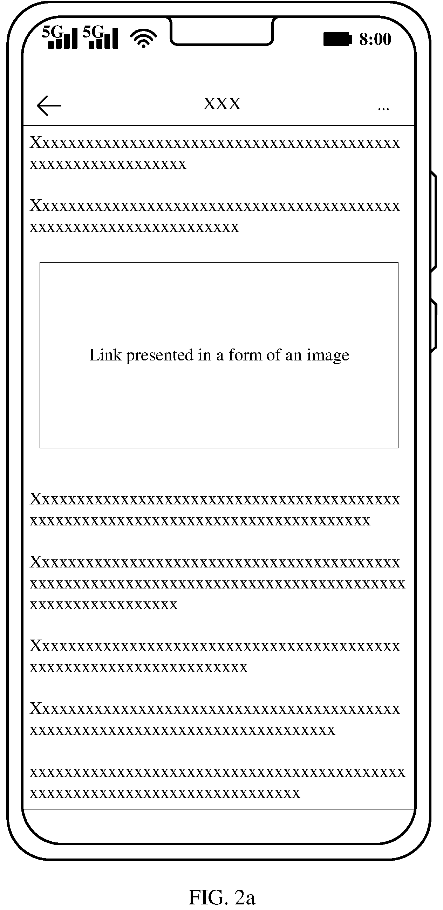

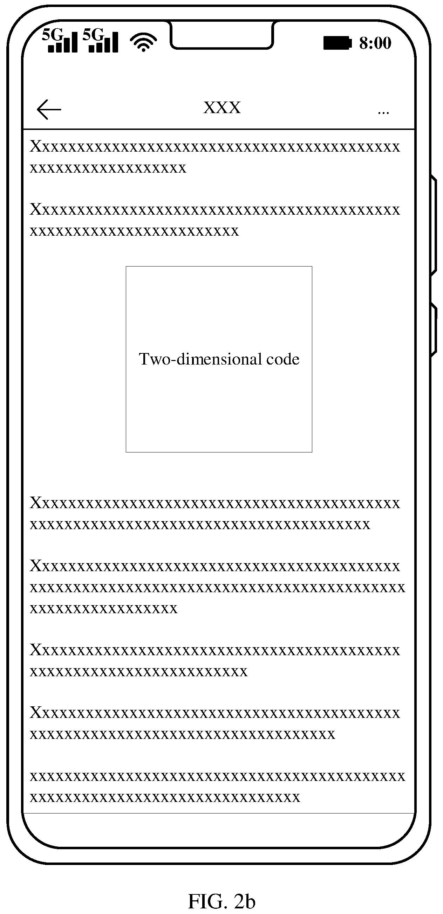

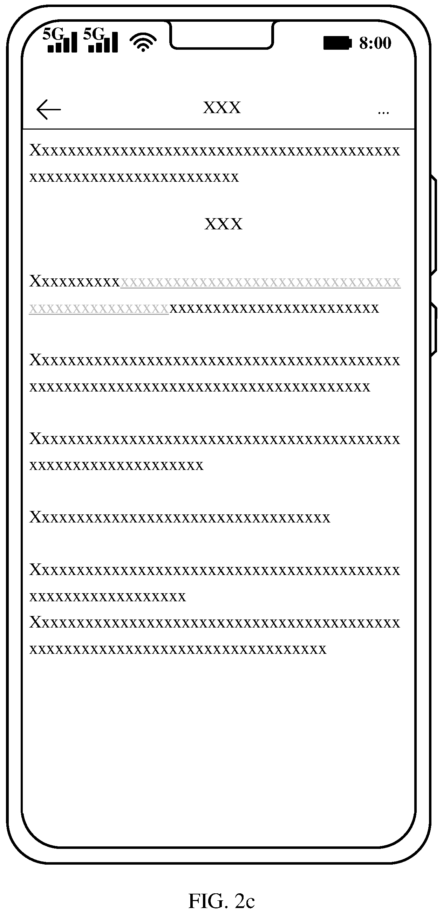

Scenario 2: In an article reading scenario, a link (for example, a link presented in a form of an image, a two-dimensional code, or a text hyperlink) is inserted before, after, or in the middle of an article. For example, FIG. 2a is a diagram of a link presented in a form of an image in an article reading scenario, FIG. 2b is a diagram of a two-dimensional code in an article reading scenario, and FIG. 2c is a diagram of a text hyperlink in an article reading scenario.

If content of the link needs to be displayed, a procedure includes: (1) The user taps the link in the article. (2) The electronic device jumps to another application or another page of the current application, and needs at least one to three levels of pages to display the content of the link after the jump, where these pages include a pop-up ad page, a permission pop-up window such as jump allowing, a traffic attraction page of another application, and the like. (3) After finishing viewing the content of the link, the user needs to tap a return button one to three times to return to the page for reading the article and continue to read the following content. Therefore, the process of displaying the content of the link has problems of complex operations, low efficiency, and long waiting time of the user.

For the foregoing scenario 1, only in the chat scenario, after copying the text of the link, the electronic device may monitor copied content on a clipboard, and display an icon of a recommended application on a current page after identifying a password from the copied content; and the user views actual detailed content by tapping the icon to jump to an application. However, the user still needs to assist in obtaining the text of the link. The content of the link needs to be displayed after an interface of another application is jumped to, and the content of the link cannot be directly displayed. The entire process is long, the user needs to perform a plurality of operations, the operations are complex, and waiting time of the user is long.

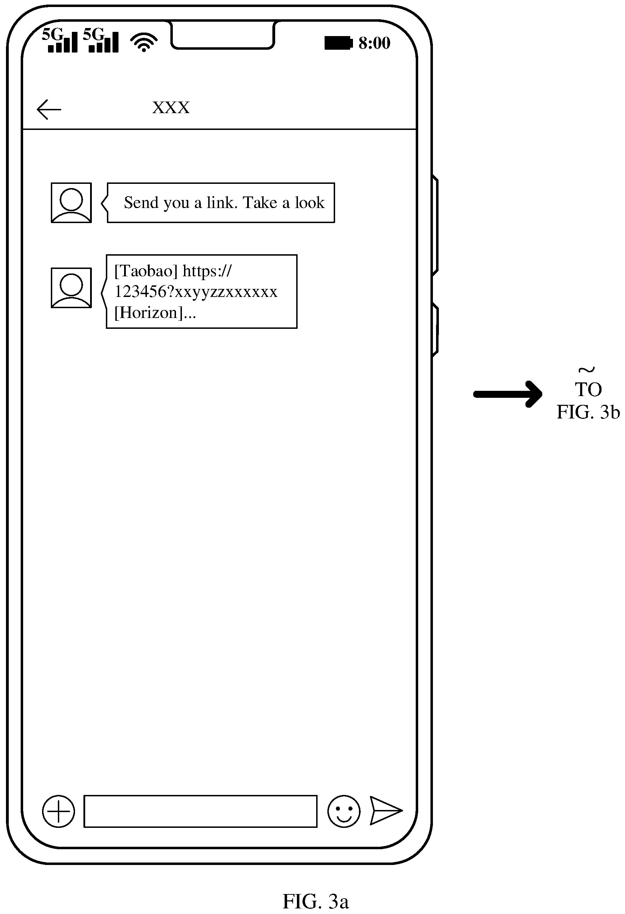

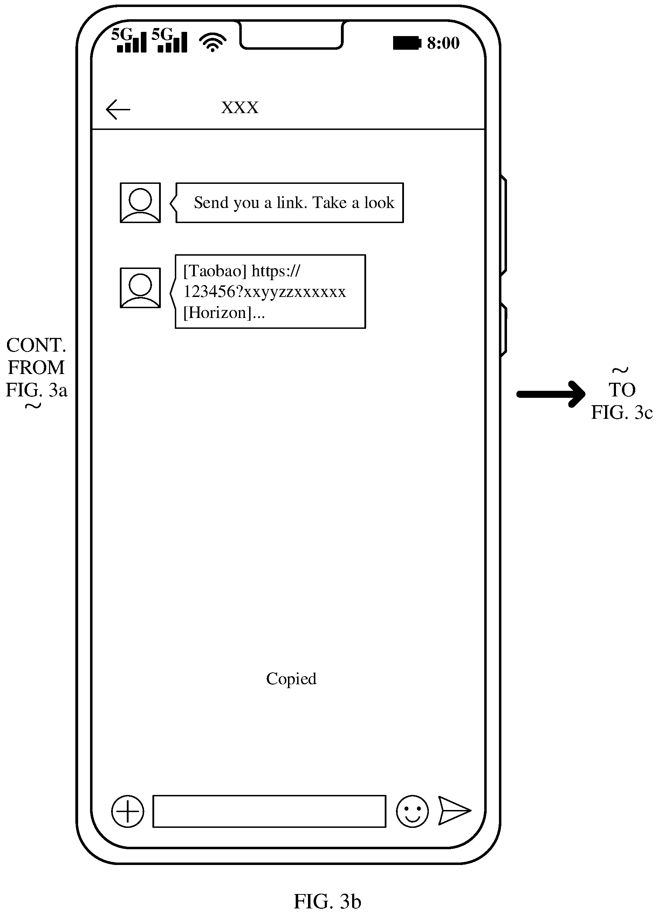

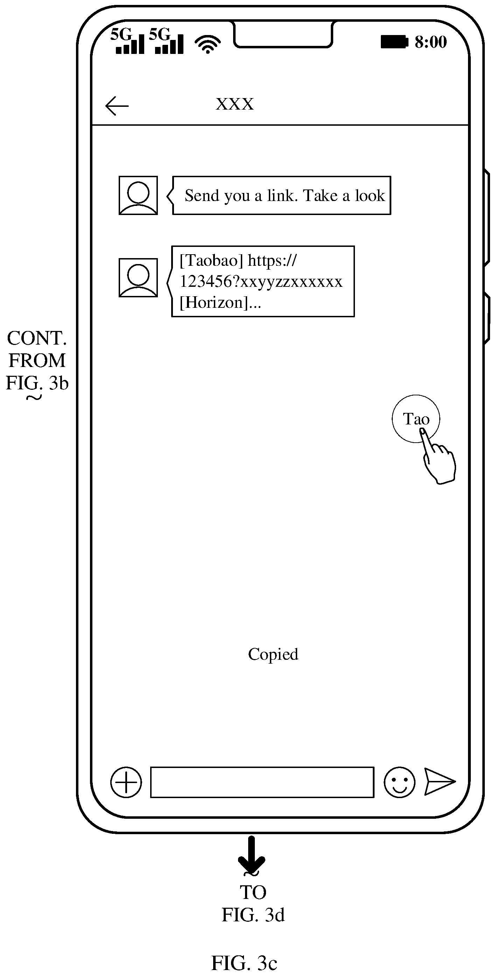

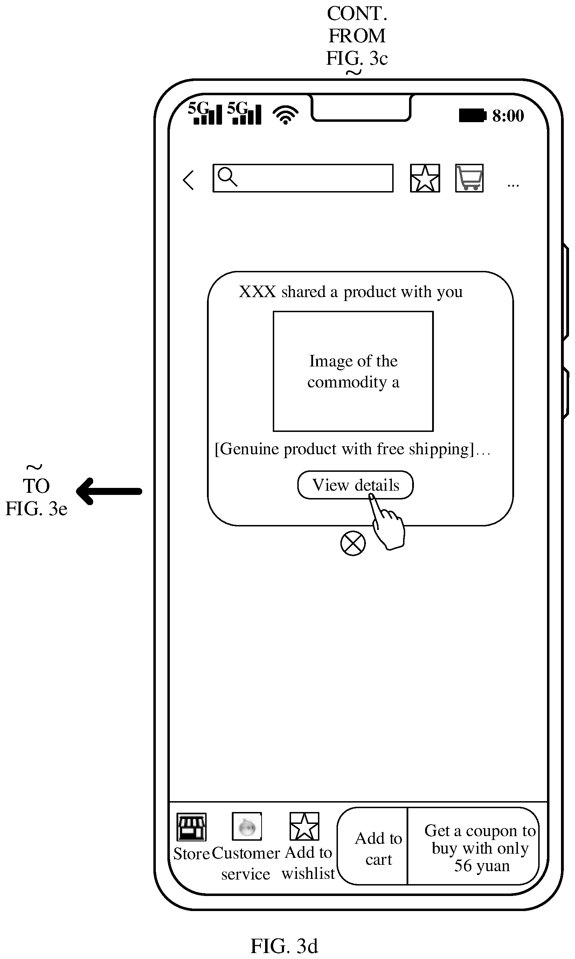

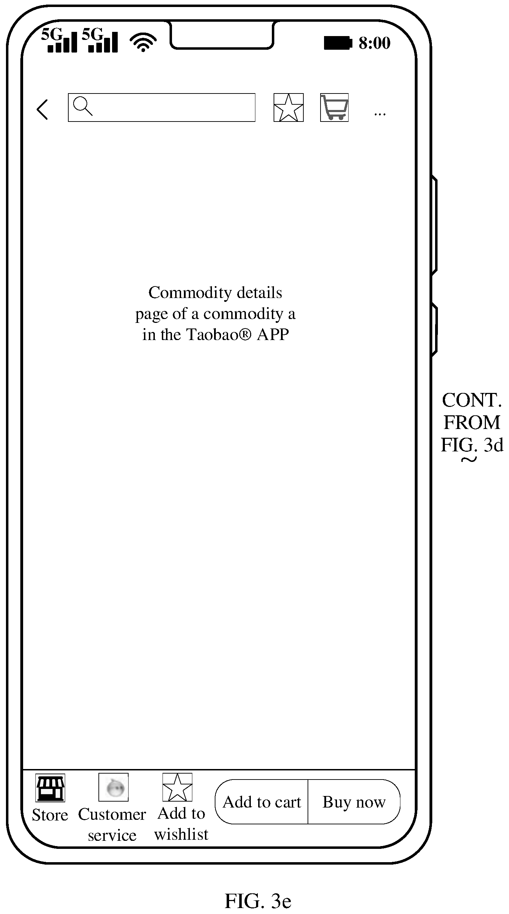

For example, FIG. 3a to FIG. 3e are diagrams of displaying content of a link in a chat scenario. As shown in FIG. 3a, a mobile phone receives a password on a chat page. Then, the mobile phone copies the password in response to a copying operation of the user. As shown in FIG. 3b, after copying the password, the mobile phone displays "Copied" on the chat page. As shown in FIG. 3c, after copying the password, the mobile phone identifies that an application corresponding to the password is a shopping application, displays an icon of the shopping application on the chat page, jumps to the shopping application in response to a tapping operation performed by the user on the icon of the shopping application, and pops up a window shown in FIG. 3d on an interface of the shopping application. In response to tapping a button for viewing details in a pop-up window, as shown in FIG. 3e, the mobile phone displays a commodity details page corresponding to the password on the interface of the shopping application.

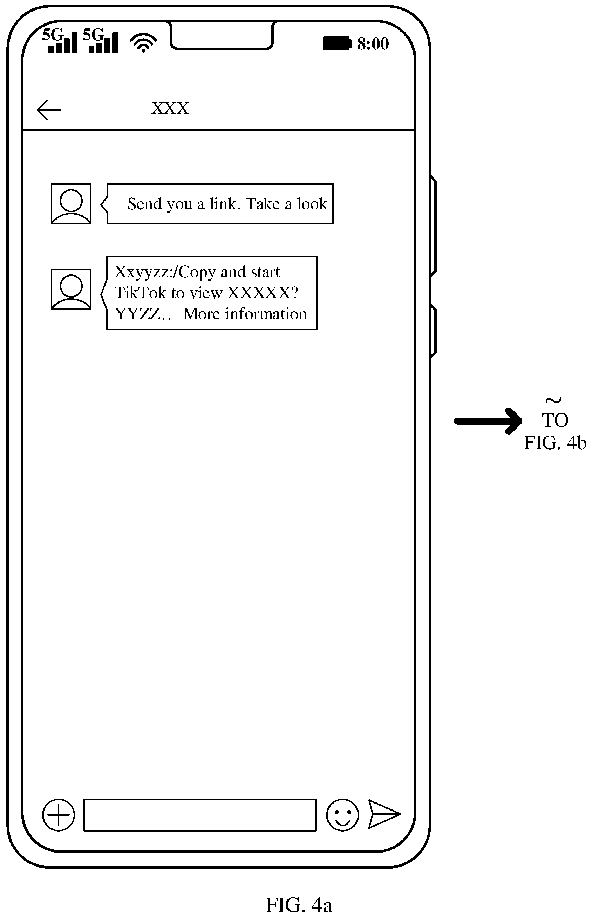

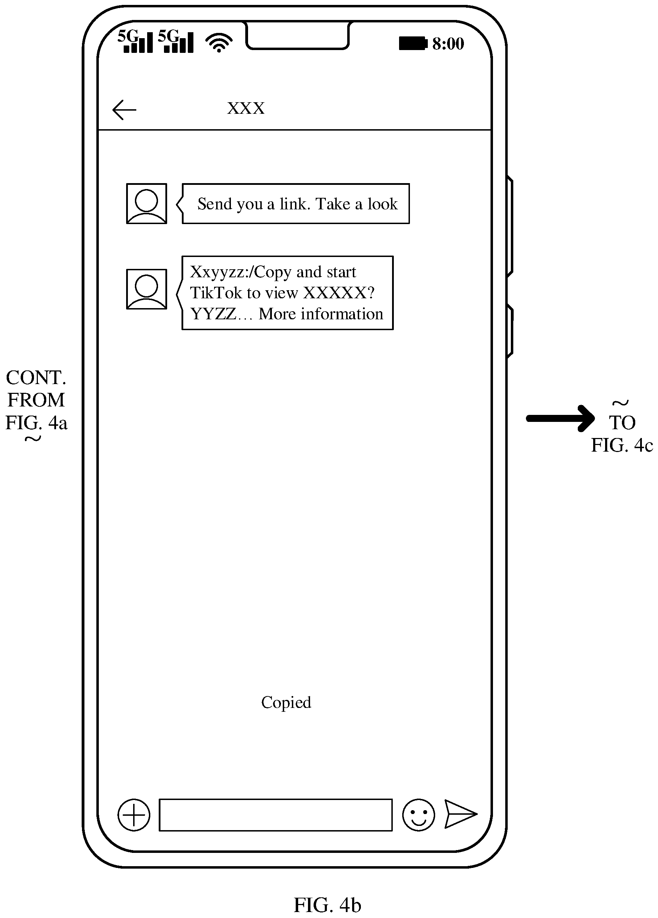

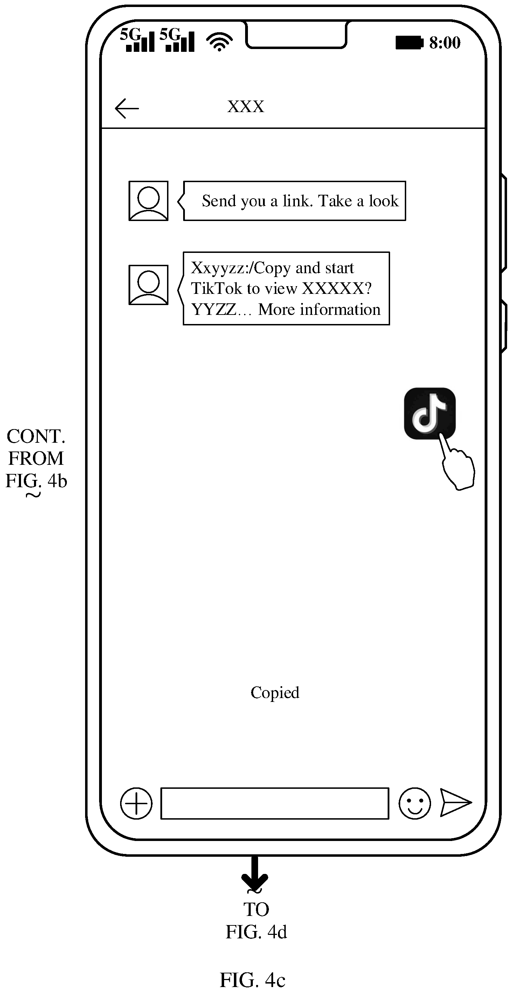

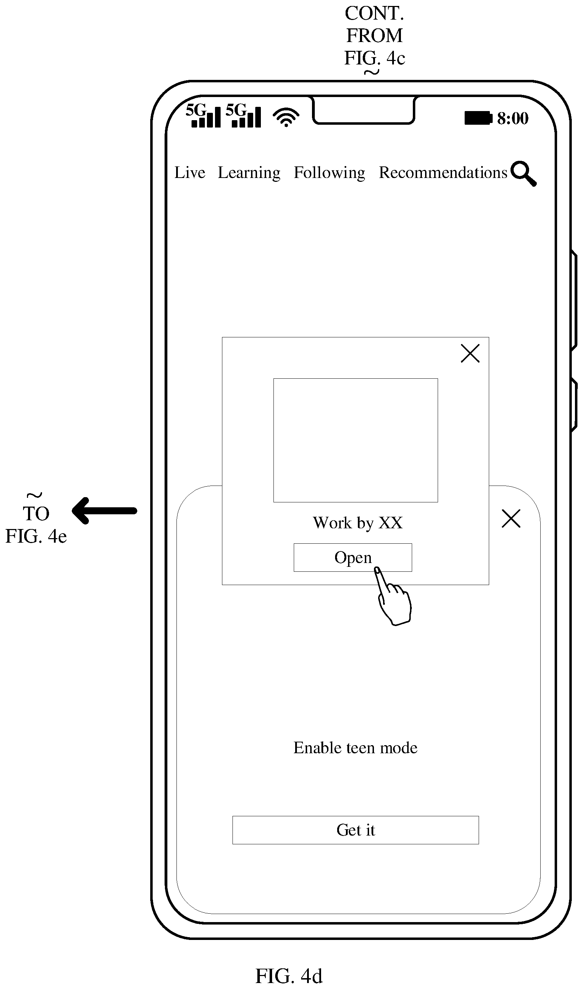

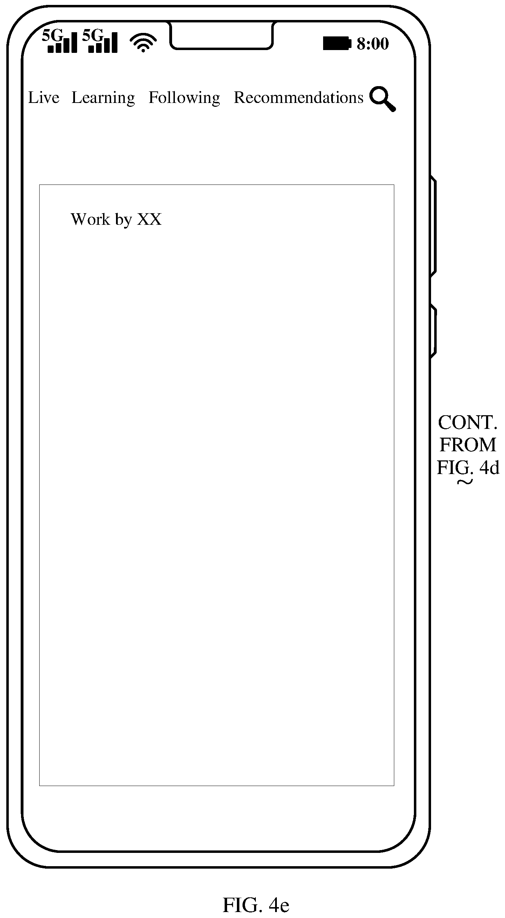

For example, FIG. 4a to FIG. 4e are other diagrams of displaying content of a link in a chat scenario. As shown in FIG. 4a, a mobile phone receives a password on a chat page. Then, the mobile phone copies the password in response to an operation of the user. As shown in FIG. 4b, after copying the password, the mobile phone displays "Copied" on the chat page. As shown in FIG. 4c, after copying the password, the mobile phone identifies that an application corresponding to the password is a short-form video application, displays an icon of the short-form video application on the chat page, jumps to the short-form video application in response to a tapping operation performed by the user on the icon of the short-form video application, and pops up a window shown in FIG. 4d on an interface of the short-form video application. In response to tapping a button for viewing details in a pop-up window, as shown in FIG. 4e, the mobile phone displays a short-form video details page corresponding to the password on the interface of the short-form video application.

Based on the foregoing technical problem, embodiments of the present invention provide a content display method and an electronic device. For a chat scenario and a reading scenario, an interaction manner in which viewing of content of the link is automatically triggered in response to a first event that occurs on an interface on which a link is located is proposed. In an entire process in which the electronic device displays the content of the link, operations are convenient, and waiting time of a user is short.

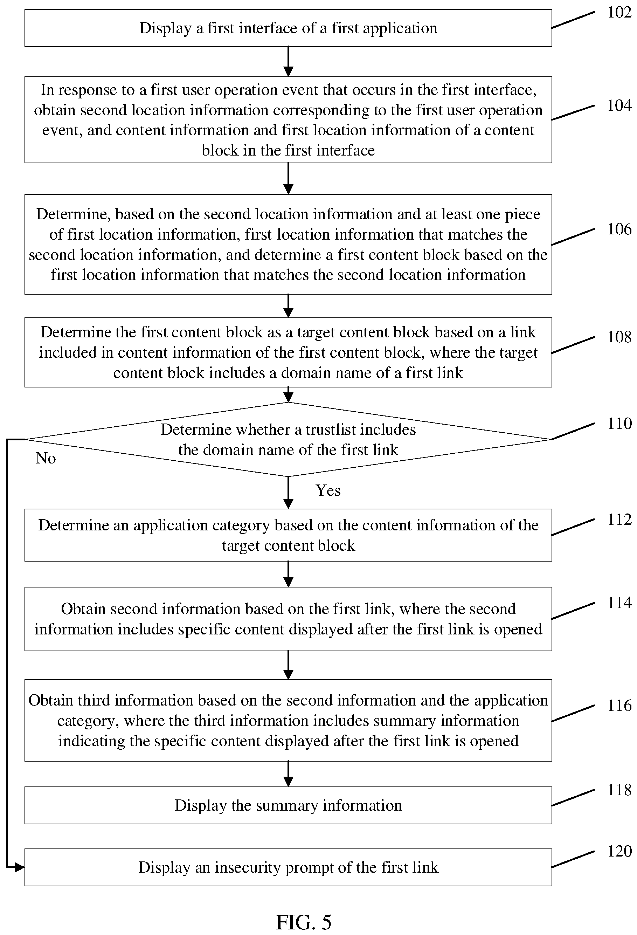

FIG. 5 is a flowchart of a content display method according to an embodiment of the present invention. As shown in FIG. 5, the method includes the following steps.

Step 102: Display a first interface of a first application.

For example, the first interface includes a chat interface or an article reading interface.

Step 104: In response to a first user operation event that occurs in the first interface, obtain second location information corresponding to the first user operation event, and content information and first location information of a content block in the first interface.

For example, the first interface includes a first link.

For example, the first user operation event includes a touch and hold operation performed by a user on the first link or a tap operation performed by the user on a menu option of the first link. The first user operation event does not cause a content change event of the first interface. In this embodiment of this application, the content change event of the first interface is an event that content to be displayed in the first interface changes, and the content change event of the first interface can trigger the first interface to be refreshed.

For example, the first link includes one or more of a password, a URL link, a link presented in a form of an image, a two-dimensional code, and a text link.

For example, the first interface includes at least one content block.

For example, the content information includes a text and/or an image displayed on the content block.

For example, the first location information includes location information of the content block on a screen of an electronic device.

In this step, the electronic device obtains, through monitoring, the first user operation event in a system in response to the first user operation event that occurs in the first interface, obtains screen coordinates of the first user operation event, namely, the second location information, invokes a page parsing capability, and obtains the content information and the first location information of the content block in the first interface by using a capability like an auxiliary service or optical character recognition (Optical Character Recognition, OCR).

Step 106: Determine, based on the second location information and at least one piece of first location information, first location information that matches the second location information, and determine a first content block based on the first location information that matches the second location information.

In this step, a content block corresponding to the first location information that matches the second location information is the first content block. Therefore, in this step, a content block in the first interface, namely, the first content block, in which the first link corresponding to the first user operation event is located may be determined based on the location information.

Step 108: Determine, the first content block as a target content block based on a link included in content information of the first content block, where the target content block includes a domain name of the first link.

In this step, the content information of the first content block is identified. If the link is identified, the first content block is the target content block; or if the link is not identified, the first content block is not the target content block.

For example, the target content block is a content block that includes link content of the first link and association information of the link content. The target content block includes the domain name of the first link.

Step 110: Determine whether a trustlist includes the domain name of the first link, and if the trustlist includes the domain name of the first link, perform step 112, or if the trustlist does not include the domain name of the first link, perform step 122.

In this step, a security check is performed by determining whether the trustlist includes the domain name of the first link. If the trustlist includes the domain name of the first link, the security check succeeds; or if the trustlist does not include the domain name of the first link, the security check fails.

Step 112: Determine an application category based on the content information of the target content block.

In this step, when the security check succeeds, a second application used to open the first link is determined based on the content information of the target content block, and the application category is determined based on the second application. The application category indicates a category of the second application that opens the first link.

For example, the target content block includes a source application, a set of original content page nodes (the nodes include a node text, a description, a screen location, and a node class), an accessible link (for example, a URL link or a password), and an application category.

For example, the application category includes a social type, a short-form video type, a shopping type, a travel type, a video type, a music type, a radio type, a community type, a news type, a convenient life type, or a browser type.

For example, applications of the social type include WeChat^{®} and QQ^{®}.

For example, applications of the short-form video type include TikTok^{®} and Kuaishou^{®}.

For example, applications of the shopping type include Taobao^{®} and Jingdong^{®}.

For example, applications of the travel type include Baidu Map^{®} and Amap^{®}.

For example, applications of the video type include bilibili^{®} and iQIYI^{®}.

For example, applications of the music type include QQ Music^{®} and NetEase Cloud Music^{®}.

For example, applications of the radio type include Ximalaya FM^{®} and Lizhi FM^{®}.

For example, applications of the community type include RedNote^{®}, Zhihu^{®}, and Weibo^{®}.

For example, applications of the news type include Toutiao^{®} and Tencent News^{®}.

For example, applications of the convenient life type include Dianping^{®} and Meituan^{®}.

For example, an application of the browser type includes a browser.

For example, the first application and the second application are the same or different.

Step 114: Obtain second information based on the first link, where the second information includes specific content displayed after the first link is opened.

In some possible embodiments, step 114 specifically includes: creating a first virtual screen; opening, on the first virtual screen, the first link by using the second application; and obtaining the second information from a page obtained after the first link is opened.

If the second application is not installed on the electronic device, the first link may alternatively be opened by using another application corresponding to the application category.

Optionally, the electronic device may further create a second virtual screen; open, on the second virtual screen by using the application corresponding to the application category, a second link related to the first link; and obtain fourth information from a page obtained after the second link is opened. For example, the first link is a link to a details page of a commodity A in a first shopping application, the second link is a link to a details page of a commodity B that is similar to the commodity A and that is in a second shopping application, and the fourth information is a price of the commodity B. The first shopping application and the second shopping application are the same or different. Therefore, in this embodiment of this application, price comparison information of a commodity can also be displayed when the content of the first link is quickly displayed.

Step 116: Obtain third information based on the second information and the application category, where the third information includes summary information indicating the specific content displayed after the first link is opened.

In this step, the electronic device inputs the second information and the application category into a large model to output the third information. The large model is a pre-trained model, and can output the third information based on the second information and the application category.

For example, the application category includes at least one function category, and the function category is a subcategory of the application category.

For example, the application category is the social type, and a function category of the social type includes a chat window page, a personal business card, or an applet page.

For example, the application category is the short-form video type, and a function category of the short-form video type includes a short-form video play page or a commodity details page.

For example, the application category is the shopping type, and a function category of the shopping type includes a commodity details page or a store details page.

For example, the application category is the travel type, and a function category of the travel type includes a location details page or a route details page.

For example, the application category is the video type, and a function category of the video type includes a video play page.

For example, the application category is the music type, and a function category of the music type includes a music play page or an album details page.

For example, the application category is the radio type, and a function category of the radio type includes a radio play page.

For example, the application category is the community type, and a function category of the community type includes a post details page, a personal homepage, or a commodity details page.

For example, the application category is the news type, and a function category of the news type includes a news details page or a video play page.

For example, the application category is the convenient life type, and a function category of the convenient life type includes a store details page or a group purchase details page.

For example, the application category is the browser type, and a function category of the browser type includes an actual content page (a text or a video).

Optionally, when the application category of the first link includes one function category, the function category is determined once the application category is determined, there is no need to further determine the function category of the first link, and the second information and the application category are directly input into the large model to output the third information.

Optionally, when the application category includes a plurality of function categories, before step 116, the method further includes: obtaining the function category based on the second information. Step 116 specifically includes: obtaining the third information based on the second information, the application category, and the function category. In this step, the electronic device inputs the second information, the application category, and the function category into the large model to output the third information. The large model is a pre-trained model, and can output the third information based on the second information, the application category, and the function category. Optionally, the third information further includes a keyword and/or a tag indicating the specific content displayed after the first link is opened.

Step 118: Display the summary information. The procedure ends.

Step 118 may be performed by the first application of the electronic device, or may be performed by a system service or a system application of an operating system of the electronic device.

In some possible embodiments, step 118 is performed by the first application of the electronic device. Step 118 specifically includes: displaying the summary information in the first interface.

In some possible embodiments, step 118 is performed by the first application, the system service, or the system application of the electronic device. Step 118 specifically includes: displaying, in the first interface in a superposition manner, a second interface that is not displayed in full screen, where the second interface includes the summary information.

For example, the second interface includes a semi-modal page (also referred to as a "semi-modal window"), a floating window, or the like.

In some possible embodiments, the application category of the first link includes one function category, and step 118 specifically includes: displaying the summary information based on the application category.

In some possible embodiments, the application category of the first link includes a plurality of function categories, and step 118 specifically includes: displaying the summary information based on the application category and the function category.

In this embodiment of this application, when the content of the first link is displayed, the application category and the function category are mainly used for typesetting, to display a display form that better meets a user requirement.

Optionally, when displaying the summary information, the electronic device may further display a function control or the like, for example, a control having a function of jumping to an application and/or quickly watching a video.

Optionally, when displaying the summary information, the electronic device may further display the keyword and/or the tag that is in the third information and that indicates the specific content displayed after the first link is opened.

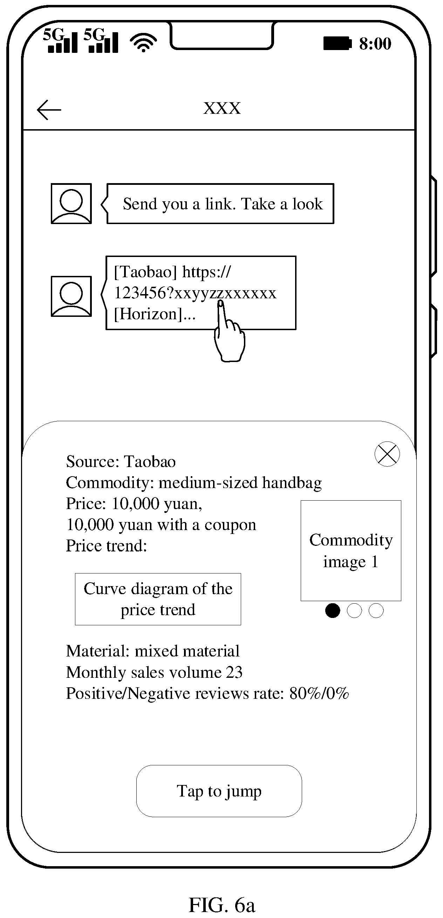

For example, FIG. 6a is a diagram of displaying content of a Taobao^{®} password on a chat page according to an embodiment of the present invention. As shown in FIG. 6a, after the Taobao^{®} password is received on the chat page, and a user touches and holds the Taobao^{®} password, a semi-modal window is displayed at the bottom of the chat page, and the semi-modal window displays the content of the Taobao^{®} password. Specifically, the displayed content of the semi-modal window includes: a source, a commodity summary (a name, a price, a price trend, a material, a positive/negative reviews rate, and monthly sales), a window closing button, a set of slidable commodity images, a "tap to jump" button, and the like. The user may tap the window closing button to close the semi-modal window; the user may tap the "tap to jump" button to directly jump to a corresponding application to continue viewing; and the user may slide an image in the set of commodity images to display a next image.

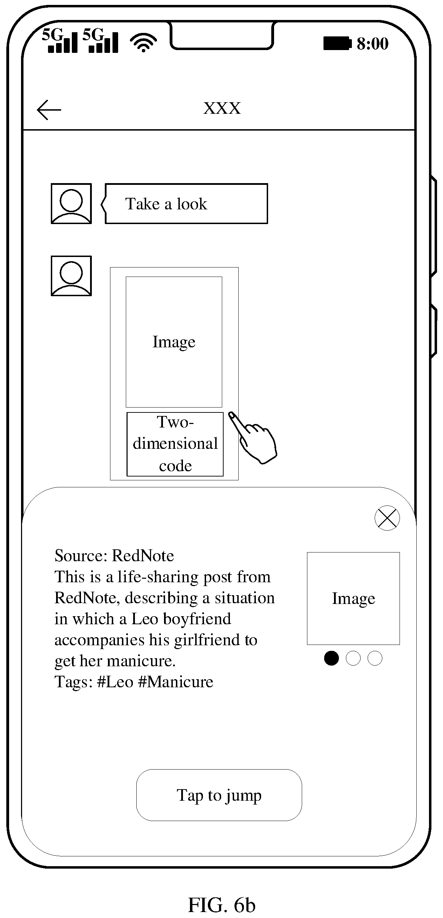

For example, FIG. 6b is a diagram of displaying content of a two-dimensional code and an image on a chat page according to an embodiment of the present invention. As shown in FIG. 6b, after the two-dimensional code and the image are received on the chat page, and the user touches and holds the two-dimensional code and the image, a semi-modal window is displayed at the bottom of the chat page, and the semi-modal window displays the content of the two-dimensional code and the image. Specifically, the displayed content of the semi-modal window includes: a source, a content summary, a tag, a window closing button, a set of slideable images, a "tap to jump" button, and the like. The user may tap the window closing button to close the semi-modal window; the user may tap the "tap to jump" button to directly jump to a corresponding application to continue viewing; and the user may slide an image in the set of images to display a next image.

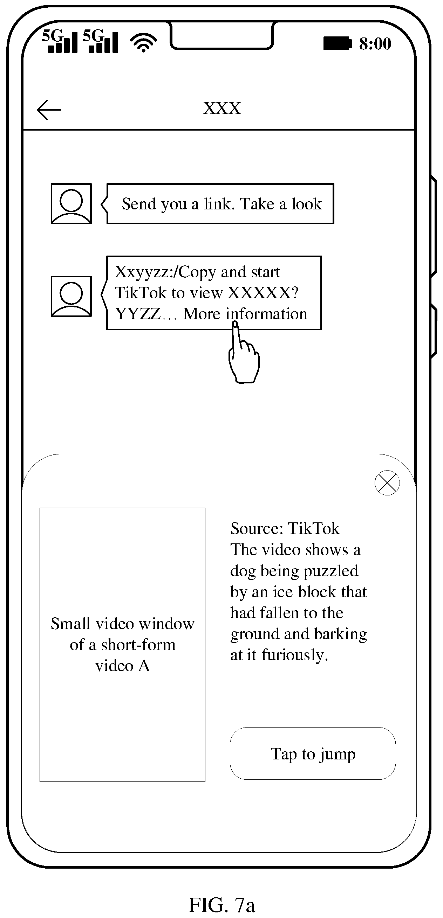

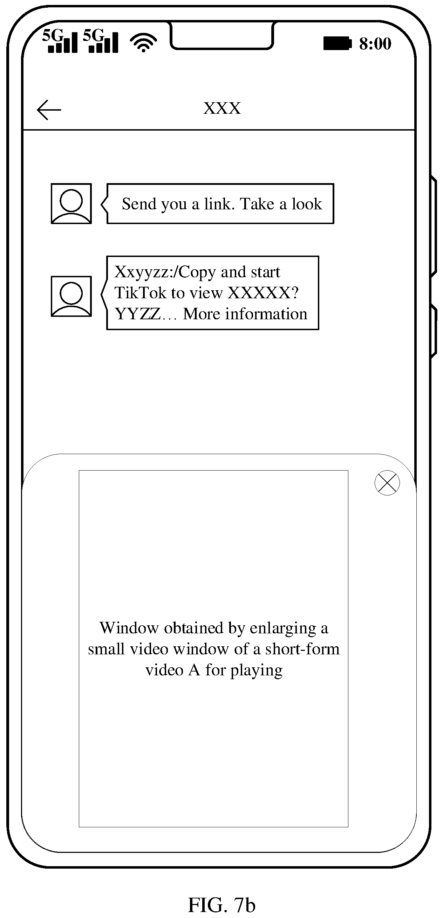

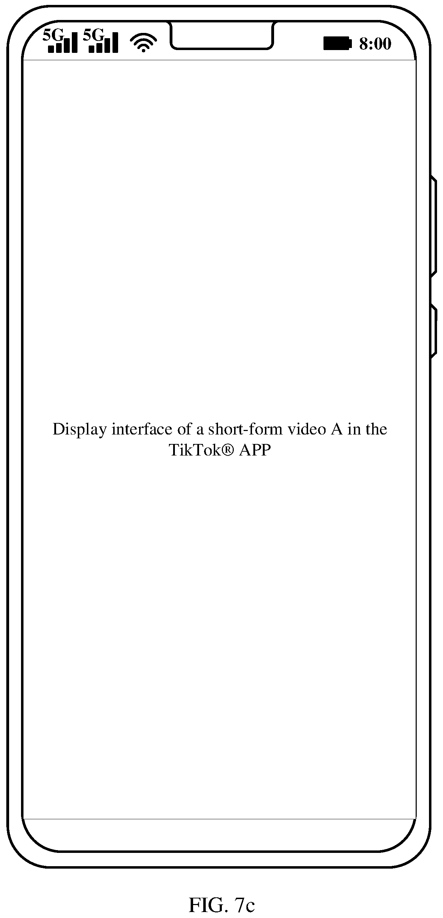

For example, FIG. 7a is a diagram of displaying content of a TikTok ^{®} password on a chat page according to an embodiment of the present invention, FIG. 7b is a diagram of enlarging a small video window in 7a for playing, and FIG. 7c is a diagram in which an electronic device directly displays content of a TikTok^{®} password after jumping from FIG. 7a or FIG. 7b to an application. As shown in FIG. 7a, after the TikTok ^{®} password is received on the chat page, and a user touches and holds the TikTok ^{®} password, a semi-modal window is displayed at the bottom of the chat page, and the semi-modal window displays the content of the TikTok password. Specifically, the displayed content of the semi-modal window includes: a source, a video summary, a small video window, a window closing button, a "tapping to jump" button, and the like. As shown in FIG. 7a, the small video window may directly play a short-form video A corresponding to the TikTok password. As shown in FIG. 7b, the small video window may also occupy a right area to enlarge and play the video after the user taps the small video window. As shown in FIG. 7a and FIG. 7b, the user may tap the window closing button to close the semi-modal window. As shown in FIG. 7a, the user may tap the "tap to jump" button to directly jump to a corresponding application to continue viewing. As shown in FIG. 7b, the user may tap the enlarged small video window to directly jump to a corresponding application to continue viewing. As shown in FIG. 7c, because the TikTok^{®} password is used, after jumping to an application from FIG. 7a or FIG. 7b, the electronic device directly displays, by using a TikTok^{®} APP, a display interface of the short-form video A corresponding to the TikTok^{®} password. In a process from FIG. 7a or FIG. 7b to FIG. 7c, there is no need to go through at least one to three levels of pages. In addition, after finishing viewing the interface shown in FIG. 7c, the user does not need to tap a return button one to three times to return to the chat page and continue the following chat. Therefore, in this application, in a process of displaying the content of the link, operations are simple, efficiency is high, and waiting time of the user is short.

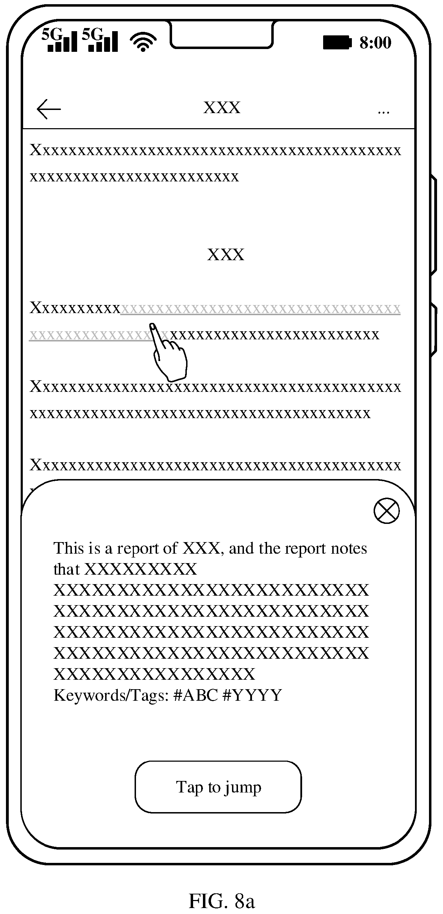

For example, FIG. 8a is a diagram of displaying content of a text link on an article reading page according to an embodiment of the present invention. As shown in FIG. 8a, the article reading page includes the text link, after a user touches and holds the text link, a semi-modal window is displayed at the bottom of the article reading page, and the semi-modal window displays content of the text link. Specifically, the displayed content of the semi-modal window includes: an article summary, a keyword/tag, a window closing button, a "tap to jump" button, and the like. The user may tap the window closing button to close the semi-modal window; and the user may tap the "tap to jump" button to directly jump to a corresponding application to continue viewing.

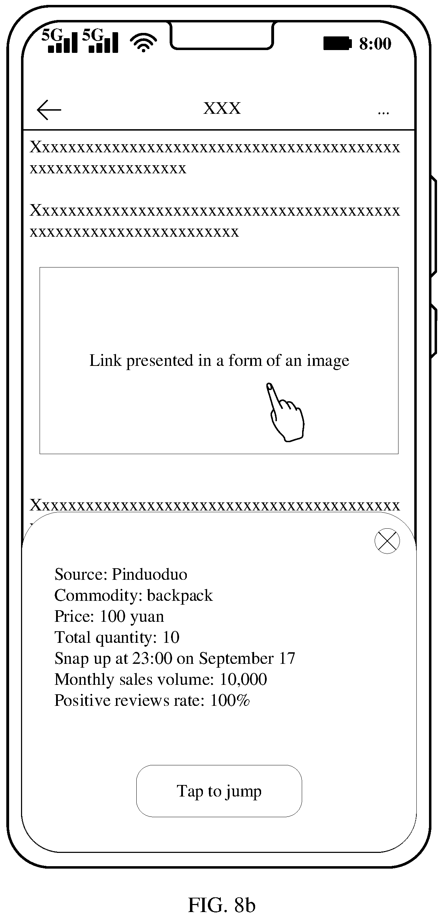

For example, FIG. 8b is a diagram of displaying, on an article reading page, content of a link presented in a form of an image according to an embodiment of the present invention. As shown in FIG. 8b, the article reading page includes a link presented in a form of an image. After the user touches and holds the link presented in a form of an image, a semi-modal window is displayed at the bottom of the article reading page, and the semi-modal window displays content of an advertisement. Specifically, the displayed content of the semi-modal window includes: a commodity source, a name, a price, monthly sales, activity information, a positive reviews rate, a window closing button, a "tap to jump" button, and the like. The user may tap the window closing button to close the semi-modal window; and the user may tap the "tap to jump" button to directly jump to a corresponding application to continue viewing.

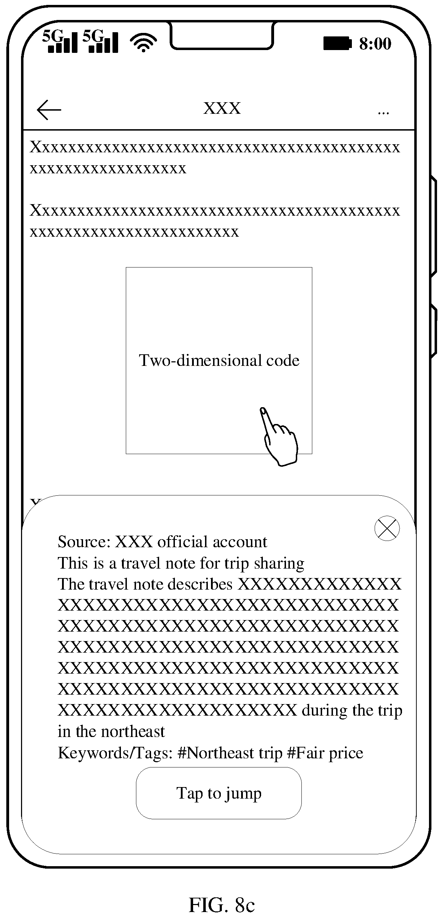

For example, FIG. 8c is a diagram of displaying content of a two-dimensional code on an article reading page according to an embodiment of the present invention. As shown in FIG. 8c, the article reading page includes a two-dimensional code. After the user touches and holds the two-dimensional code, a semi-modal window is displayed at the bottom of the article reading page, and the semi-modal window displays content of the two-dimensional code. Specifically, the displayed content of the semi-modal window includes: a source, a travel summary, a keyword/tag, a window closing button, a "tap to jump" button, and the like. The user may tap the window closing button to close the semi-modal window; and the user may tap the "tap to jump" button to directly jump to a corresponding application to continue viewing.

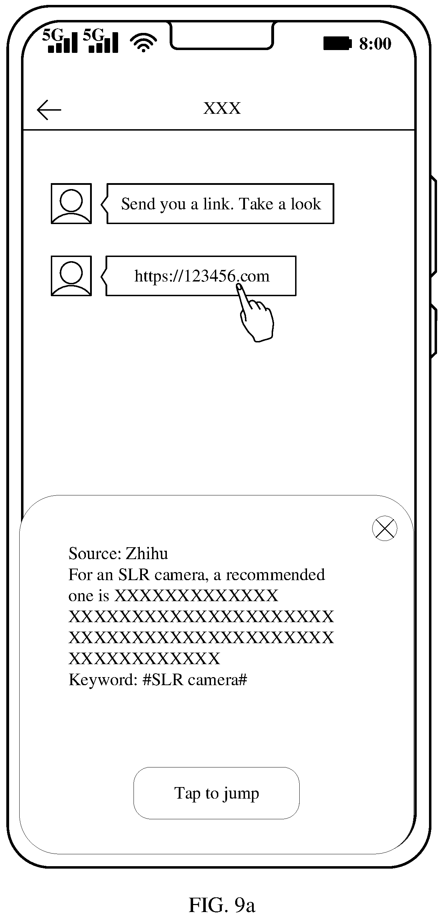

For example, FIG. 9a is a diagram of displaying content of a URL link on a chat page according to an embodiment of the present invention. As shown in FIG. 9a, after the URL link is received on the chat page, and a user touches and holds the URL link, a semi-modal window is displayed at the bottom of the chat page, and the semi-modal window displays content of the URL link. Specifically, the displayed content of the semi-modal window includes: a source, a content summary, a keyword/tag, a window closing button, a "tap to jump" button, and the like. The user may tap the window closing button to close the semi-modal window; and the user may tap the "tap to jump" button to directly jump to a corresponding application to continue viewing.

Step 120: Display an insecurity prompt of the first link. The procedure ends.

In this step, when the security check fails, the insecurity prompt of the first link is displayed. Step 120 may be performed by the first application of the electronic device, or may be performed by a system service or a system application of an operating system of the electronic device.

In some possible embodiments, step 120 is performed by the first application of the electronic device. Step 120 specifically includes: displaying the insecurity prompt of the first link in the first interface.

In some possible embodiments, step 120 is performed by the first application, the system service, or the system application of the electronic device. Step 120 specifically includes: displaying, in the first interface in a superposition manner, a third interface that is not displayed in full screen, where the third interface includes the insecurity prompt of the first link.

For example, the third interface includes a semi-modal page, a floating window, or the like.

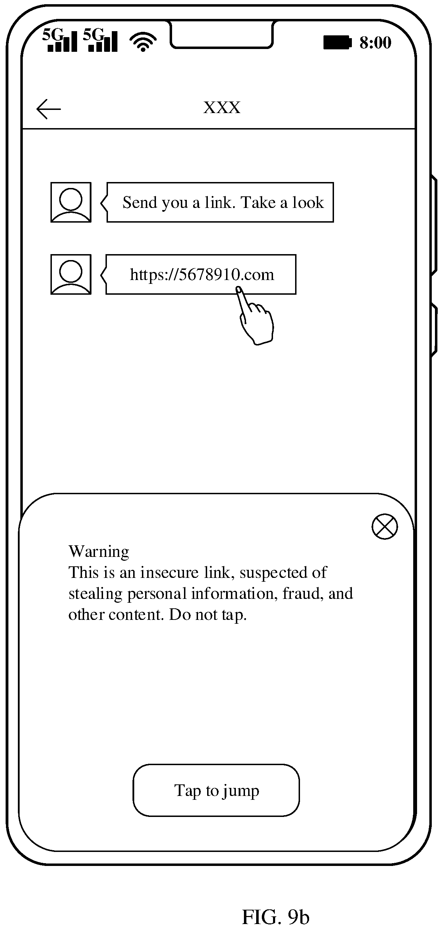

For example, FIG. 9b is a diagram of displaying an insecurity prompt of a URL link on a chat page according to an embodiment of the present invention. As shown in FIG. 9b, after the URL link is received on the chat page, and a user touches and holds the URL link, a semi-modal window is displayed at the bottom of the chat page. Because a domain name of the URL link is not in the trustlist, the security check fails, and displayed content of the semi-modal window includes an insecurity prompt. For example, the insecurity prompt is warning information. As shown in FIG. 9b, the warning information is "Warning. This is an insecure link, suspected of stealing personal information, fraud, and other content. Do not tap."

In the technical solution of the content display method provided in this embodiment of the present invention, an electronic device quickly obtains, in response to a first user operation event that occurs in a first interface, content information and location information of a content block in which a link is located, without an operation such as copying; in a manner of creating a virtual screen in a background, quickly obtains summary information of specific content displayed after the link is opened, and displays the summary information, so that a user can quickly view a content summary of the link without caring about which application can open the link or searching for a location of the application, thereby improving convenience; displays content in different forms based on an application category and a function category of the link to meet personalized requirements; and performs a security check on a domain name of the link, and continues to determine information such as the application category of the link only in a secure case, thereby improving link access security. In an insecure case, the insecurity prompt of the first link is displayed, to prevent the user from opening the link, thereby improving link access security. When the first application is different from the second application, there is no need to switch the application to view the content and then return to the original application. In an entire process in which the electronic device displays the content of the link, operations are convenient, and waiting time of a user is short.

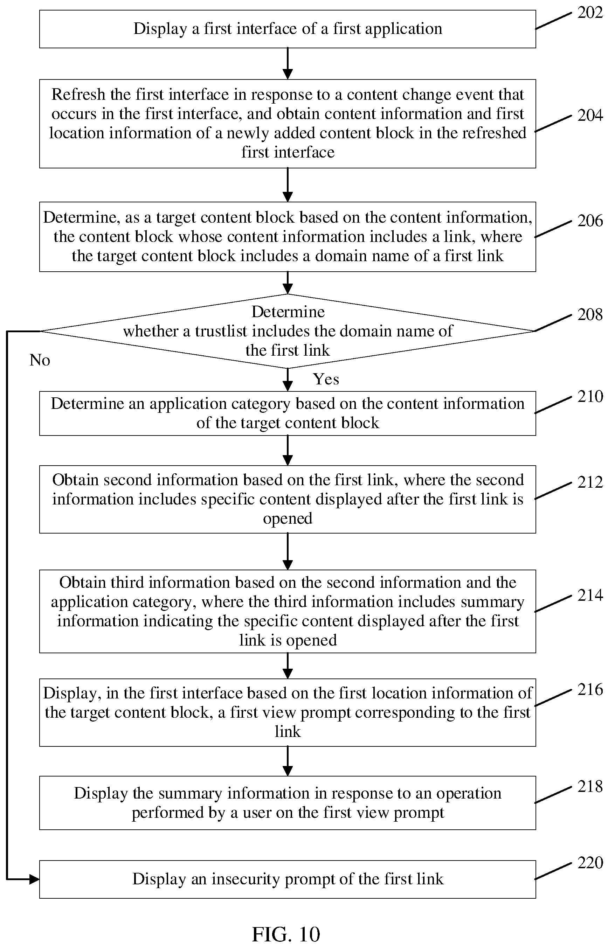

FIG. 10 is a flowchart of another content display method according to an embodiment of the present invention. As shown in FIG. 10, the method includes the following steps.

Step 202: Display a first interface of a first application.

For example, the first interface includes a chat interface or an article reading interface.

Step 204: Refresh the first interface in response to a content change event that occurs in the first interface, and obtain content information and first location information of a newly added content block in the refreshed first interface.

For example, the newly added content block in the refreshed first interface includes a first link.

In this embodiment of this application, the content change event of the first interface is an event that content to be displayed in the first interface changes, and the content change event of the first interface can trigger the first interface to be refreshed.

For example, the content change event may be automatically triggered by a system or triggered by a user operation. In this embodiment of this application, an operation of the content change event triggered by the user operation is referred to as a second user operation event. For example, the second user operation event is a sliding operation (for example, a sliding up operation or a sliding down operation) performed by the user on the first interface or a sending operation.

For example, the first interface is a chat interface of the user and Xiao Hong. When receiving a new message sent by Xiao Hong, the electronic device automatically considers that a content change event of the chat interface occurs.

For example, when the user edits a text on the chat interface and then performs the sending operation, the electronic device automatically considers that the content change event of the chat interface occurs.

For example, the first interface is a reading interface. When the user performs the sliding operation on the first interface, page content of the first interface changes, and the electronic device triggers a content change event of the reading interface in response to the sliding operation of the user that occurs in the first interface.

For example, the first link includes one or more of a password, a URL link, a link presented in a form of an image, a two-dimensional code, and a text link.

For example, the content information includes a text and/or an image displayed on the content block.

For example, the first location information includes location information of the content block on a screen of an electronic device.

In this step, the electronic device obtains, through monitoring, the content change event of the first interface in a system in response to the content change event that occurs in the first interface, invokes a page parsing capability, and obtains, by using a capability like an auxiliary service or OCR, the content information and the first location information of the newly added content block in the refreshed first interface.

Step 206: Determine, as a target content block based on the content information, the content block whose content information includes a link, where the target content block includes a domain name of the first link.

In this step, the content information of the content block is identified. If the link is identified, the content block is the target content block; or if the link is not identified, the content block is not the target content block.

For example, the target content block is a content block that includes link content of the first link. The target content block includes the domain name of the first link.

Step 208: Determine whether a trustlist includes the domain name of the first link, and if the trustlist includes the domain name of the first link, perform step 210; or if the trustlist does not include the domain name of the first link, perform step 222.

In this step, a security check is performed by determining whether the trustlist includes the domain name of the first link. If the trustlist includes the domain name of the first link, the security check succeeds; or if the trustlist does not include the domain name of the first link, the security check fails.

Step 210: Determine an application category based on the content information of the target content block.

In this step, when the security check succeeds, a second application used to open the first link is determined based on the content information of the target content block, and the application category is determined based on the second application. The application category indicates a category of the second application that opens the first link.

For example, the target content block includes: a source application, a set of original content page nodes (the nodes include a node text, a description, a screen position, and a node class), an accessible link (for example, a URL link or a password), and an application category.

For example, the application category includes a social type, a short-form video type, a shopping type, a travel type, a video type, a music type, a radio type, a community type, a news type, a convenient life type, a browser type, and the like.

Step 212: Obtain second information based on the first link, where the second information includes the specific content displayed after the first link is opened.

In some possible embodiments, step 212 specifically includes: creating a first virtual screen; opening, on the first virtual screen, the first link by using the second application; and obtaining the second information from a page obtained after the first link is opened.

If the second application is not installed on the electronic device, the first link may alternatively be opened by using another application corresponding to the application category of the second application.

Optionally, the electronic device may further create a second virtual screen; open, on the second virtual screen by using the application corresponding to the application category, a second link related to the first link; and obtain fourth information from a page obtained after the second link is opened. For example, the first link is a link to a details page of a commodity A in a first shopping application, the second link is a link to a details page of a commodity B that is similar to the commodity A and that is in a second shopping application, and the fourth information is a price of the commodity B. The first shopping application and the second shopping application are the same or different. Therefore, in this embodiment of this application, price comparison information of a commodity can also be displayed when the content of the first link is quickly displayed.

Step 214: Obtain third information based on the second information and the application category, where the third information includes summary information indicating the specific content displayed after the first link is opened.

In this step, the electronic device inputs the second information and the application category into a large model to output the third information. The large model is a pre-trained model, and can output the third information based on the second information and the application category.

For example, the application category includes at least one function category, and the function category is a subcategory of the application category.

For example, the application category is the social type, and a function category of the social type includes a chat window page, a personal business card, or an applet page.

For example, the application category is the short-form video type, and a function category of the short-form video type includes a short-form video play page or a commodity details page.

For example, the application category is the shopping type, and a function category of the shopping type includes a commodity details page or a store details page.

For example, the application category is the travel type, and a function category of the travel type includes a location details page or a route details page.

For example, the application category is the video type, and a function category of the video type includes a video play page.

For example, the application category is the music type, and a function category of the music type includes a music play page or an album details page.

For example, the application category is the radio type, and a function category of the radio type includes a radio play page.

For example, the application category is the community type, and a function category of the community type includes a post details page, a personal homepage, or a commodity details page.

For example, the application category is the news type, and a function category of the news type includes a news details page or a video play page.

For example, the application category is the convenient life type, and a function category of the convenient life type includes a store details page or a group purchase details page.

For example, the application category is the browser type, and a function category of the browser type includes an actual content page (a text or a video).

Optionally, when the application category of the first link includes one function category, the function category is determined once the application category is determined, there is no need to further determine the function category of the first link, and the second information and the application category are directly input into the large model to output the third information.

Optionally, when the application category includes a plurality of function categories, before step 116, the method further includes: obtaining the function category based on the second information. Step 116 specifically includes: obtaining the third information based on the second information, the application category, and the function category. In this step, the electronic device inputs the second information, the application category, and the function category into the large model to output the third information. The large model is a pre-trained model, and can output the third information based on the second information, the application category, and the function category.

Optionally, the third information further includes a keyword and/or a tag indicating the specific content displayed after the first link is opened.

Step 216: Display, in the first interface based on first location information of the target content block, a first view prompt corresponding to the first link.

In this step, the first location information of the target content block is used as a reference for displaying the first view prompt by the electronic device, and the first view prompt may be displayed at a screen location corresponding to the first location information, or may be displayed near the screen location corresponding to the first location information.

Step 218: Display the summary information in response to an operation performed by the user on the first view prompt.

In this embodiment of this application, the first view prompt of the first link is first displayed, and then the content of the first link is displayed after the user performs an operation on the first view prompt. Therefore, the user may determine, based on whether the electronic device displays the first view prompt of the first link, whether the first link supports quick viewing, and display the content of the first link only when the user needs to quickly view the content of the first link.

In some possible embodiments, the electronic device displays the content of the first link in response to the operation performed by the user on the first view prompt within preset time. The electronic device stops, in response to an operation that is not performed by the user on the first view prompt within the preset time, displaying the first view prompt corresponding to the first link. In this embodiment of this application, the first view prompt of the first link is first displayed, and the content of the first link is displayed only when the user performs an operation on the first view prompt within the preset time. If the user does not perform the operation on the first view prompt within the preset time, the first view prompt is stopped being displayed.

Step 218 may be performed by the first application of the electronic device, or may be performed by a system service or a system application of an operating system of the electronic device.

In some possible embodiments, step 218 is performed by the first application of the electronic device. Step 218 specifically includes: displaying the summary information in the first interface in response to the operation performed by the user on the first view prompt.

In some possible embodiments, step 218 is performed by the first application, the system service, or the system application of the electronic device. Step 118 specifically includes: in response to the operation performed by the user on the first view prompt, displaying, in the first interface in a superposition manner, a second interface that is not displayed in full screen, where the second interface includes the summary information.

For example, the second interface includes a semi-modal page (also referred to as a "semi-modal window"), a floating window, or the like. In some possible embodiments, the application category of the first link includes one function category, and step 218 specifically includes: in response to the operation performed by the user on the first view prompt, displaying the summary information based on the application category.

In some possible embodiments, the application category of the first link includes a plurality of function categories, and step 218 specifically includes: in response to the operation performed by the user on the first view prompt, displaying the summary information based on the application category and the function category.

In this embodiment of this application, when the summary information is displayed, the application category and the function category are mainly used for typesetting, to display a display form that better meets a user requirement.

Optionally, when displaying the summary information, the electronic device may further display a function control or the like, for example, a control having a function of jumping to an application and/or quickly watching a video.

Optionally, when displaying the summary information, the electronic device may further display the keyword and/or the tag that is in the third information and that indicates the specific content displayed after the first link is opened.

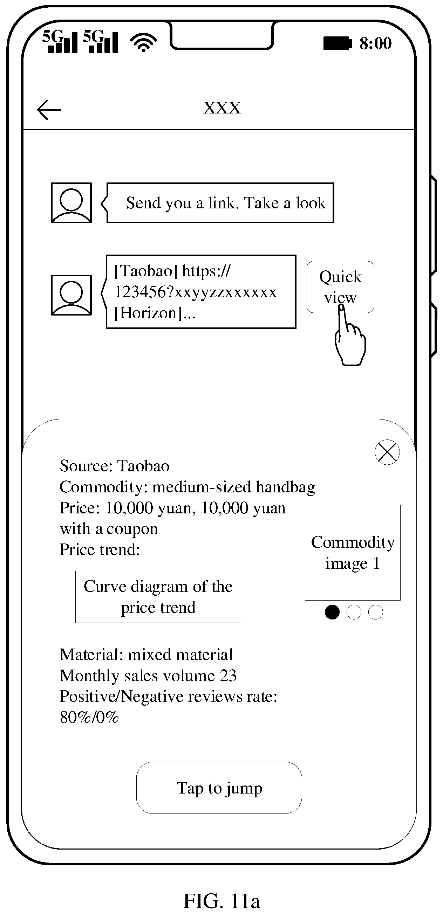

For example, FIG. 11a is another diagram of displaying content of a Taobao^{®} password on a chat page according to an embodiment of the present invention. As shown in FIG. 11a, the Taobao^{®} password is received on the chat page, a mobile phone identifies that the chat page is refreshed, and displays a corresponding first view prompt, for example, a quick view button, on a right side of the Taobao^{®} password. After a user taps the quick view button, a semi-modal window is displayed at the bottom of the chat page. The semi-modal window displays the content of the Taobao^{®} password. Specifically, the displayed content of the semi-modal window includes: a source, a commodity summary (a name, a price, a price trend, a material, a positive/negative reviews rate, and monthly sales), a window closing button, a set of slidable commodity images, a "tap to jump" button, and the like. The user may tap the window closing button to close the semi-modal window; the user may tap the "tap to jump" button to directly jump to a corresponding application to continue viewing; and the user may slide an image in the set of commodity images to display a next image.

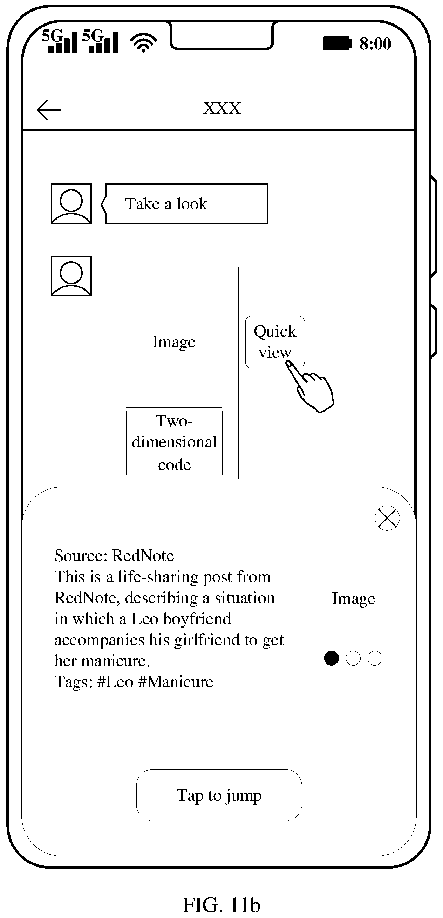

For example, FIG. 11b is another diagram of displaying content of a two-dimensional code and an image on a chat page according to an embodiment of the present invention. As shown in FIG. 11b, the two-dimensional code and the image are received on the chat page, and a mobile phone identifies that the chat page is refreshed, and displays a corresponding first view prompt, for example, a quick view button, on a right side of the two-dimensional code and the image. After a user taps the quick view button, a semi-modal window is displayed at the bottom of the chat page. The semi-modal window displays the content of the two-dimensional code and the image. Specifically, the displayed content of the semi-modal window includes: a source, a content summary, a tag, a window closing button, a set of slideable images, a "tap to jump" button, and the like. The user may tap the window closing button to close the semi-modal window; the user may tap the "tap to jump" button to directly jump to a corresponding application to continue viewing; and the user may slide an image in the set of images to display a next image.

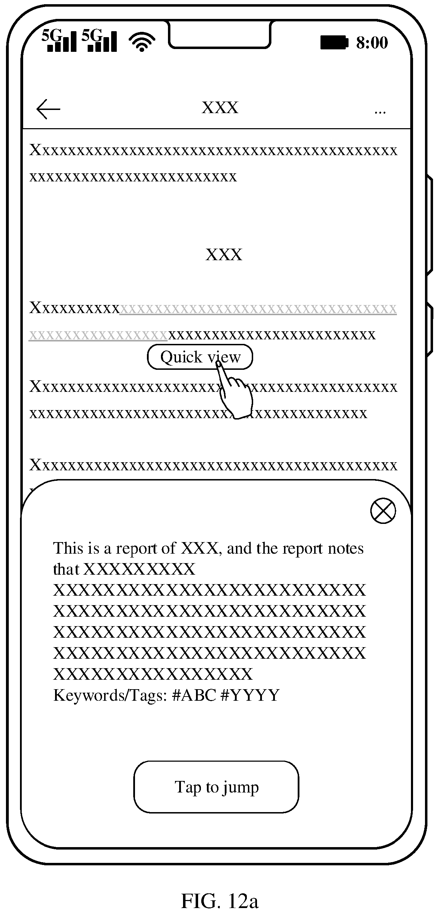

For example, FIG. 12a is another diagram of displaying content of a text link on an article reading page according to an embodiment of the present invention. As shown in FIG. 12a, when reading an article, a user slides a page up and down, and a mobile phone identifies that the page is refreshed. A refreshed article reading page includes the text link, and a corresponding first view prompt, for example, a quick view button, is displayed on a right side of the text link. After the user taps the quick view button, a semi-modal window is displayed at the bottom of the article reading page, and the semi-modal window displays the content of the text link. Specifically, the displayed content of the semi-modal window includes: an article summary, a keyword/tag, a window closing button, a "tap to jump" button, and the like. The user may tap the window closing button to close the semi-modal window; and the user may tap the "tap to jump" button to directly jump to a corresponding application to continue viewing.

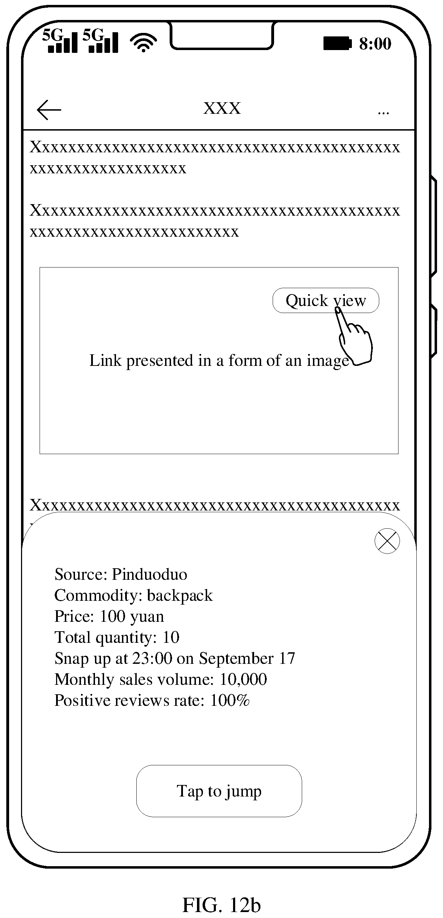

For example, FIG. 12b is another diagram of displaying, on an article reading page, content of a link presented in a form of an image according to an embodiment of the present invention. As shown in FIG. 12b, when reading an article, a user slides a page up and down, and a mobile phone identifies that the page is refreshed. A refreshed article reading page includes the link presented in a form of an image, and a corresponding first view prompt, for example, a quick view button, is displayed on the link presented in a form of an image. After the user taps the quick view button, a semi-modal window is displayed at the bottom of the article reading page, and the semi-modal window displays content of an advertisement. Specifically, the displayed content of the semi-modal window includes: a commodity source, a name, a price, monthly sales, activity information, a positive reviews rate, a window closing button, a "tap to jump" button, and the like. The user may tap the window closing button to close the semi-modal window; and the user may tap the "tap to jump" button to directly jump to a corresponding application to continue viewing.

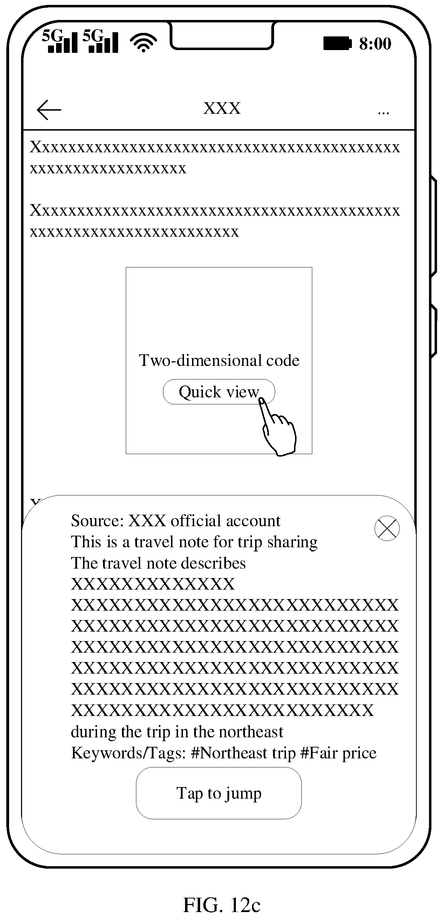

For example, FIG. 12c is another diagram of displaying content of a two-dimensional code on an article reading page according to an embodiment of the present invention. As shown in FIG. 12c, when reading an article, a user slides a page up and down, and a mobile phone identifies that the page is refreshed. A refreshed article reading page includes the two-dimensional code, and a corresponding first view prompt, for example, a quick view button, is displayed on the two-dimensional code. After the user taps the quick view button, a semi-modal window is displayed at the bottom of the article reading page, and the semi-modal window displays content of the two-dimensional code. Specifically, the displayed content of the semi-modal window includes: a source, a travel summary, a keyword/tag, a window closing button, a "tap to jump" button, and the like. The user may tap the window closing button to close the semi-modal window; and the user may tap the "tap to jump" button to directly jump to a corresponding application to continue viewing.

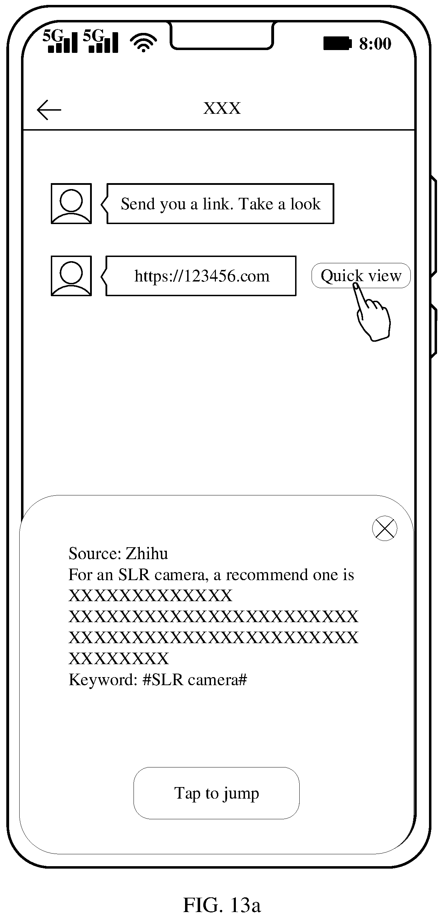

For example, FIG. 13a is another diagram of displaying content of a URL link on a chat page according to an embodiment of the present invention. As shown in FIG. 13a, the URL link is received on the chat page, a mobile phone identifies that the chat page is refreshed, and displays a corresponding first view prompt, for example, a quick view button, on a right side of the URL link. After a user taps the quick view button, a semi-modal window is displayed at the bottom of the chat page, and the semi-modal window displays the content of the URL link. Specifically, the displayed content of the semi-modal window includes: a source, a content summary, a keyword/tag, a window closing button, a "tap to jump" button, and the like. The user may tap the window closing button to close the semi-modal window; and the user may tap the "tap to jump" button to directly jump to a corresponding application to continue viewing.

Step 220: Display an insecurity prompt of the first link. The procedure ends.

In this step, when the security check fails, the insecurity prompt of the first link is displayed. Step 220 may be performed by the first application of the electronic device, or may be performed by a system service or a system application of an operating system of the electronic device.

In some possible embodiments, step 220 is performed by the first application of the electronic device. Step 220 specifically includes: displaying the insecurity prompt of the first link in the first interface.

In some possible embodiments, step 220 is performed by the first application, the system service, or the system application of the electronic device. Step 120 specifically includes: displaying, in the first interface in a superposition manner, a third interface that is not displayed in full screen, where the third interface includes the insecurity prompt of the first link.

For example, the third interface includes a semi-modal page, a floating window, or the like.

In some possible embodiments, step 220 specifically includes: displaying, based on the first location information of the target content block, a second view prompt corresponding to the first link; and displaying the third interface in response to an operation performed by the user on the second view prompt, where the third interface includes the insecurity prompt of the first link.

In some possible embodiments, the electronic device displays the insecurity prompt of the first link in response to the operation performed by the user on the second view prompt within the preset time. The electronic device stops, in response to an operation that is not performed by the user on the second view prompt within the preset time, displaying the second view prompt corresponding to the first link.

In this step, the first location information of the target content block is used as a reference for displaying the second view prompt by the electronic device, and the second view prompt may be displayed at a screen location corresponding to the first location information, or may be displayed near the screen location corresponding to the first location information.

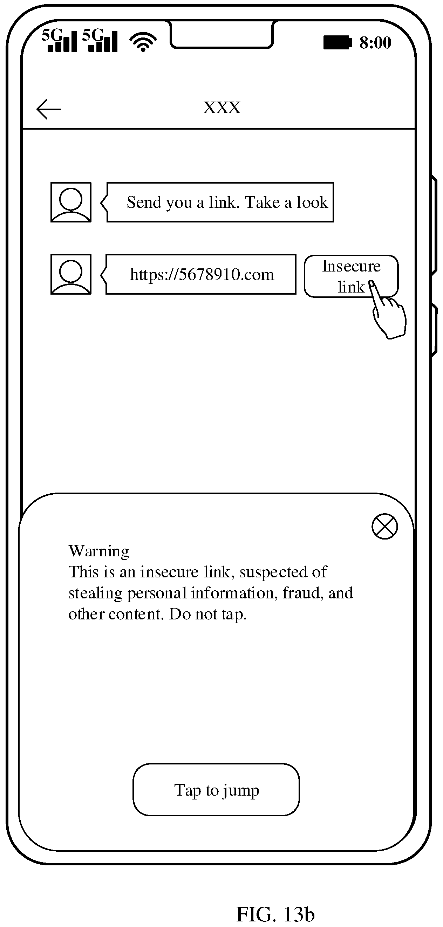

For example, FIG. 13b is another diagram of displaying an insecurity prompt of a URL link on a chat page according to an embodiment of the present invention. As shown in FIG. 13b, the URL link is received on the chat page, and a mobile phone identifies that the chat page is refreshed. Because a domain name of the URL link is not in the trustlist, the security check fails, and a corresponding second view prompt, for example, an insecure link button, is displayed on a right side of the URL link. After the user taps the insecure link button, a semi-modal window is displayed at the bottom of the chat page, and displayed content of the semi-modal window includes an insecurity prompt. For example, the insecurity prompt is warning information. As shown in FIG. 13b, the warning information is "Warning. This is an insecure link, suspected of stealing personal information, fraud, and other content. Do not tap."

In the technical solution of the content display method provided in this embodiment of the present invention, a link that can be quickly viewed in a first interface can be learned of only when a content change event of the first interface occurs, without an operation such as copying. Summary information of specific content displayed after the link is opened is quickly obtained in a manner of creating a virtual screen in a background, so that a user can quickly view a content summary of the link without caring about which application can open the link or searching for a location of the application, thereby improving convenience. Content in different forms is displayed based on an application category and a function category of the link to meet personalized requirements. In this embodiment of this application, a security check is performed on a domain name of the link, and information such as the application category of the link continues to be determined only in a secure case, thereby improving link access security. In an insecure case, the insecurity prompt of the link is displayed, to prevent the user from opening the link, thereby improving link access security. When the first application is different from the second application, there is no need to switch the application to view the content and then return to the original application. In an entire process in which the electronic device displays the content of the link, operations are convenient, and waiting time of a user is short.

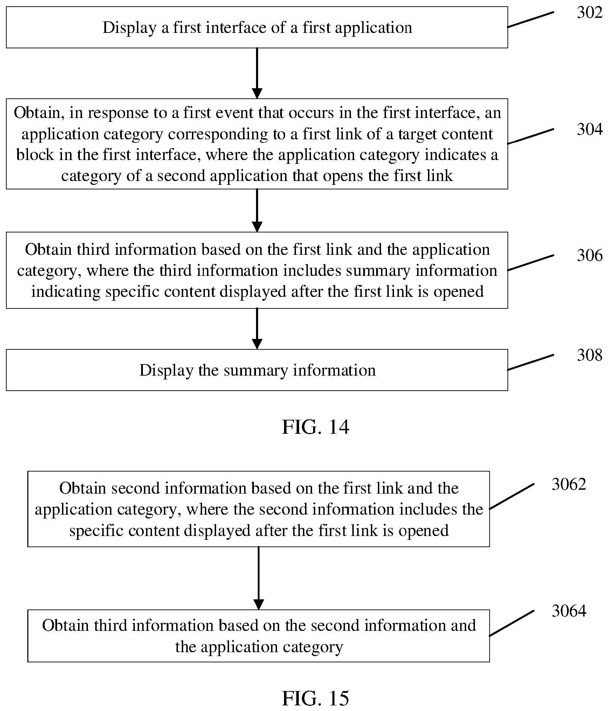

Based on the methods shown in FIG. 5 and FIG. 10, an embodiment of the present invention provides still another content display method. FIG. 14 is a flowchart of still another content display method according to an embodiment of the present invention. As shown in FIG. 14, the method includes the following steps.

Step 302: Display a first interface of a first application.

For example, the first interface includes a chat interface or an article reading interface.

Step 304: Obtain, in response to a first event that occurs in the first interface, an application category corresponding to a first link of a target content block in the first interface, where the application category indicates a category of a second application that opens the first link.

In some possible embodiments, the first event is a first user operation event. Step 304 specifically includes: in response to the first event that occurs in the first interface, obtaining a first content block that is in a content block of the first interface and that corresponds to a location of the first event; when the first content block includes a link, determining the first content block as the target content block; and obtaining the application category corresponding to the first link in the target content block.

For example, the first user operation event includes a touch and hold operation performed by a user on the first link or a tap operation performed by the user on a menu option of the first link. The first user operation event does not cause a content change event of the first interface. In this embodiment of this application, the content change event of the first interface is an event that content to be displayed in the first interface changes, and the content change event of the first interface can trigger the first interface to be refreshed.

In some possible embodiments, the first event is the content change event of the first interface. Step 304 specifically includes: refreshing the first interface in response to the first event that occurs in the first interface; obtaining the target content block that is newly added to the refreshed first interface and that includes a link; and obtaining the application category corresponding to the first link in the target content block.

For example, the content change event may be automatically triggered by a system or triggered by a user operation. In this embodiment of this application, an operation of the content change event triggered by the user operation is referred to as a second user operation event. For example, the second user operation event is a sliding operation (for example, a sliding up operation or a sliding down operation) performed by the user on the first interface or a sending operation.

For example, the first interface is a chat interface of the user and Xiao Hong. When receiving a new message sent by Xiao Hong, the electronic device automatically considers that a content change event of the chat interface occurs.

For example, when the user edits a text on the chat interface and then performs the sending operation, the electronic device automatically considers that the content change event of the chat interface occurs.

For example, the first interface is a reading interface. When the user performs the sliding operation on the first interface, page content of the first interface changes, and the electronic device triggers a content change event of the reading interface in response to the sliding operation of the user.

For example, the first interface includes at least one content block. The content block including the link in the first interface is the target content block.

For example, the first link includes one or more of a password, a URL link, a link presented in a form of an image, a two-dimensional code, and a text link.

For example, the application category includes a social type, a short-form video type, a shopping type, a travel type, a video type, a music type, a radio type, a community type, a news type, a convenient life type, or a browser type.

For example, the first application and the second application are different.

For example, the target content block includes a domain name of the first link.

Optionally, before step 304, the method further includes step 303.

Step 303: Determine whether a trustlist includes the domain name of the first link, and if the trustlist includes the domain name of the first link, perform step 3004; or if the trustlist does not include the domain name of the first link, perform step 310.

Step 306: Obtain third information based on the first link and the application category, where the third information includes summary information indicating specific content displayed after the first link is opened.

For example, the first link includes one or more of a password, a URL link, a link presented in a form of an image, a two-dimensional code, and a text link.

In some possible embodiments, as shown in FIG. 15, step 306 specifically includes step 3062 and step 3064.

Step 3062: Obtain second information based on the first link, where the second information includes the specific content displayed after the first link is opened.

In some possible embodiments, step 3062 specifically includes: creating a first virtual screen; opening, on the first virtual screen, the first link by using the second application; and obtaining the second information from a page obtained after the first link is opened. If the second application is not installed on the electronic device, the first link may alternatively be opened by using another application corresponding to the application category of the second application.

Step 3064: Obtain the third information based on the second information and the application category.

Optionally, before step 3064, the method further includes step 3063.

Step 3063: Obtain a function category based on the second information, where the function category indicates a category of a function of a page corresponding to the first link in the second application.

For example, the application category is a social type, and the function category includes a chat window page, a personal business card, or an applet page; or
the application category is a short-form video type, and the function category includes a short-form video play page or a commodity details page; or
the application category is a shopping type, and the function category includes a commodity details page or a store details page; or
the application category is a travel type, and the function category includes a location details page or a route details page; or
the application category is a video type, and the function category includes a video play page; or
the application category is a music type, and the function category includes a music play page or an album details page; or
the application category is a radio type, and the function category includes a radio play page; or
the application category is a community type, and the function category includes a post details page, a personal homepage, or a commodity details page; or
the application category is a news type, and the function category includes a news details page or a video play page; or
the application category is a convenient life type, and the function category includes a store details page or a group purchase details page; or
the application category is a browser type, and the function category includes an actual content page.

In some possible embodiments, step 3064 specifically includes: obtaining the third information based on the second information, the application category, and the function category.

Step 308: Display the summary information. The procedure ends.

In some possible embodiments, the first event is the content change event of the first interface. Before step 308, the method further includes: displaying, based on first location information of the target content block, a first view prompt corresponding to the first link; and performing step 308 in response to an operation performed by the user on the first view prompt.

In some possible embodiments, the first event is the content change event of the first interface. Before step 308, the method further includes: displaying, based on the first location information of the target content block, the first view prompt corresponding to the first link; performing step 308 in response to the operation performed by the user on the first view prompt within preset time; and stopping, in response to an operation that is not performed by the user on the first view prompt within the preset time, displaying the first view prompt corresponding to the first link.

Step 308 may be performed by the first application of the electronic device, or may be performed by a system service or a system application of an operating system of the electronic device.

In some possible embodiments, step 308 is performed by the first application of the electronic device. Step 308 specifically includes: displaying the summary information in the first interface.

In some possible embodiments, step 308 is performed by the first application, the system service, or the system application of the electronic device. Step 308 includes: displaying, in the first interface in a superposition manner, a second interface that is not displayed in full screen, where the second interface includes the summary information. In this embodiment of this application, the second interface that is not displayed in full screen is displayed in the first interface in a superposition manner, so that the summary information is displayed.

For example, the second interface includes a semi-modal page, a floating window, or the like.

Step 310: Display an insecurity prompt of the first link.

In this step, when the security check fails, the insecurity prompt of the first link is displayed. Step 310 may be performed by the first application of the electronic device, or may be performed by a system service or a system application of an operating system of the electronic device.

In some possible embodiments, step 310 is performed by the first application of the electronic device. Step 310 specifically includes: displaying the insecurity prompt of the first link in the first interface.

In some possible embodiments, step 310 is performed by the first application, the system service, or the system application of the electronic device. Step 310 specifically includes: displaying, in the first interface in a superposition manner, a third interface that is not displayed in full screen, where the third interface includes the insecurity prompt of the first link.

For example, the third interface includes a semi-modal page, a floating window, or the like. In the technical solutions of the content display method provided in embodiments of the present invention, the method includes: displaying a first interface of a first application; obtaining, in response to a first event that occurs in the first interface, an application category corresponding to a first link of a target content block in the first interface, where the application category indicates a category of a second application that opens the first link; obtaining third information based on the first link and the application category, where the third information includes summary information indicating specific content displayed after the first link is opened; and displaying the summary information. In an entire process in which the electronic device displays content of a link, operations are convenient, and waiting time of a user is short.

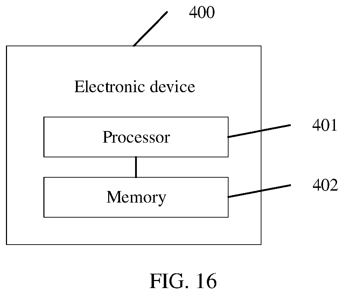

FIG. 16 is a diagram of a structure of an electronic device according to an embodiment of the present invention. It should be understood that the electronic device 400 can perform the steps in the content display method. To avoid repetition, details are not described herein again. The electronic device 400 includes at least one processor 401 and at least one memory 402.

An embodiment of this application provides an electronic device. The electronic device may be a terminal device or a circuit device built into the terminal device. The electronic device may be configured to perform the functions/steps in the foregoing method embodiments.

An embodiment of this application provides a computer-readable storage medium. The computer-readable storage medium stores instructions. When the instructions are run on a terminal device, the terminal device is enabled to perform the functions/steps in the foregoing method embodiments.

An embodiment of this application further provides a computer program product including instructions. When the computer program product is run on a computer or any one of at least one processor, the computer is enabled to perform the functions/steps in the foregoing method embodiments.

In embodiments of this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. "At least one of the following terms" and similar expressions refer to any combination of these terms, including a singular item or any combination of plural terms. For example, at least one of a, b, and c may represent: a, b, c, a-b, a-c, b-c, or a-b-c, where a, b, and c may be one or more.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing an electronic device (which may be a personal computer, a server, a network device, or the like) to perform all or some of the steps of the methods described in embodiments of this application. The foregoing storage medium includes: any medium that can store program code, for example, a USB flash disk, a removable hard disk, a read-only memory, a random access memory, a magnetic disk, or an optical disc.

The foregoing descriptions are merely specific implementations this application. Any variation or replacement readily figured out by a person skilled in the art within the technical scope disclosed in this application shall fall within the protection scope in this application. Therefore, the protection scope of this application shall be subject to the protection scope of the claims.

## Claims

1. A content display method, wherein the method comprises:
displaying a first interface of a first application;
obtaining, in response to a first event that occurs in the first interface, an application category corresponding to a first link of a target content block in the first interface, wherein the application category indicates a category of a second application that opens the first link;
obtaining third information based on the first link and the application category, wherein the third information comprises summary information indicating specific content displayed after the first link is opened; and
displaying the summary information.

2. The method according to claim 1, wherein the obtaining the third information based on the first link and the application category comprises:
obtaining second information based on the first link, wherein the second information comprises the specific content displayed after the first link is opened; and
obtaining the third information based on the second information and the application category.

3. The method according to claim 2, wherein before the obtaining the third information based on the second information and the application category, the method further comprises:
obtaining a function category based on the second information, wherein the function category indicates a category of a function of a page corresponding to the first link in the second application; and
the obtaining the third information based on the second information comprises:
obtaining the third information based on the second information, the application category, and the function category.

4. The method according to any one of claims 1 to 3, wherein the target content block comprises a domain name of the first link; and
before the obtaining the application category corresponding to the first link of the target content block in the first interface, the method further comprises:
determining whether a trustlist comprises the domain name of the first link; and
if the trustlist comprises the domain name of the first link, performing the obtaining the application category corresponding to the first link of the target content block in the first interface.

5. The method according to any one of claims 1 to 4, wherein the obtaining, in response to the first event that occurs in the first interface, the application category corresponding to the first link of the target content block in the first interface comprises:
in response to the first event that occurs in the first interface, obtaining a first content block that is in a content block in the first interface and that corresponds to a location of the first event;
when the first content block comprises a link, determining the first content block as the target content block; and
obtaining the application category corresponding to the first link in the target content block.

6. The method according to claim 5, wherein the first event is a first user operation event.

7. The method according to any one of claims 1 to 4, wherein the first event is a content change event of the first interface.

8. The method according to claim 7, wherein the obtaining, in response to the first event that occurs in the first interface, the application category corresponding to the first link of the target content block in the first interface comprises:
refreshing the first interface in response to the first event that occurs in the first interface;
obtaining the target content block that is newly added to the refreshed first interface and that comprises a link; and
obtaining the application category corresponding to the first link in the target content block.

9. The method according to claim 7 or 8, wherein before the displaying the summary information, the method further comprises:
displaying, based on first location information of the target content block, a first view prompt corresponding to the first link; and in response to an operation performed by the user on the first view prompt, performing the displaying the summary information.

10. The method according to any one of claims 1 to 9, wherein the displaying the summary information comprises:
displaying, in the first interface in a superposition manner, a second interface that is not displayed in full screen, wherein the second interface comprises the summary information.

11. The method according to any one of claims 1 to 10, wherein the first interface comprises a chat interface or a reading interface.

12. The method according to any one of claims 1 to 11, wherein the first link comprises one or more of a password, a universal resource locator URL link, a link presented in a form of an image, a two-dimensional code, and a text link.

13. The method according to any one of claims 2 to 12, wherein the obtaining the second information based on the first link and the application category comprises:
creating a first virtual screen;
opening, on the first virtual screen, the first link by using the second application; and
obtaining the second information from a page obtained after the first link is opened.

14. The method according to claim 1, wherein the application category comprises a social type, a short-form video type, a shopping type, a travel type, a video type, a music type, a radio type, a community type, a news type, a convenient life type, or a browser type.

15. The method according to claim 3 or 10, wherein the application category is a social type, and the function category comprises a chat window page, a personal business card, or an applet page; or
the application category is a short-form video type, and the function category comprises a short-form video play page or a commodity details page; or
the application category is a shopping type, and the function category comprises a commodity details page or a store details page; or
the application category is a travel type, and the function category comprises a location details page or a route details page; or
the application category is a video type, and the function category comprises a video play page; or
the application category is a music type, and the function category comprises a music play page or an album details page; or
the application category is a radio type, and the function category comprises a radio play page; or
the application category is a community type, and the function category comprises a post details page, a personal homepage, or a commodity details page; or
the application category is a news type, and the function category comprises a news details page or a video play page; or
the application category is a convenient life type, and the function category comprises a store details page or a group purchase details page; or
the application category is a web page type, and the function category comprises an actual content page.

16. The method according to any one of claims 1 to 15, wherein the first application and the second application are different.

17. An electronic device, comprising a processor and a memory, wherein the memory is configured to store a computer program, the computer program comprises program instructions, and when the processor runs the program instructions, the electronic device is enabled to perform steps of the method according to any one of claims 1 to 16.

18. A computer-readable storage medium, wherein the computer-readable storage medium stores a computer program, the computer program comprises program instructions, and when the program requests to be run by a computer, the computer is enabled to perform the method according to any one of claims 1 to 16.
